(19) Europäisches Patentamt European Patent Office Office européen des brevets

(11) **EP 4 099 264 B1**

(12) **EUROPEAN PATENT SPECIFICATION**

(45) Date of publication and mention
of the grant of the patent:
**24.04.2024 Bulletin 2024/17**

(21) Application number: **20926680.8**

(22) Date of filing: **24.03.2020**

(51) International Patent Classification (IPC):
**G06V 10/774** (2022.01)    **G06V 10/24** (2022.01)
**G06V 10/25** (2022.01)    **G06V 10/44** (2022.01)
**G06V 40/10** (2022.01)    **G06T 7/00** (2017.01)
**G06T 11/00** (2006.01)

(52) Cooperative Patent Classification (CPC):
**G06V 40/107; G06T 11/00; G06V 10/247;**
**G06V 10/25; G06V 10/44; G06V 10/774;**
G06V 2201/06

(86) International application number:
**PCT/JP2020/012992**

(87) International publication number:
**WO 2021/192028 (30.09.2021 Gazette 2021/39)**

(54) **LEARNING DEVICE AND LEARNING METHOD**

LERNVORRICHTUNG UND LERNVERFAHREN

DISPOSITIF D'APPRENTISSAGE ET PROCÉDÉ D'APPRENTISSAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2022 Bulletin 2022/49**

(73) Proprietor: **Sony Group Corporation**
**Tokyo 108-0075 (JP)**

(72) Inventors:
• **MURABAYASHI, Noboru**
**Tokyo 140-0002 (JP)**
• **TOKITA, Takeshi**
**Tokyo 140-0002 (JP)**

(74) Representative: **D Young & Co LLP**
**3 Noble Street**
**London EC2V 7BQ (GB)**

(56) References cited:
JP-A- 2018 022 210    US-A1- 2018 033 130
US-A1- 2018 189 596    US-A1- 2018 189 596

• WANG KE ET AL: "Perspective Transformation Data Augmentation for Object Detection", IEEE ACCESS, IEEE, USA, vol. 8, 26 December 2019 (2019-12-26), pages 4935-4943, XP011766163, DOI: 10.1109/ACCESS.2019.2962572 [retrieved on 2020-01-08]
• Kathuria Ayoosh: "Data Augmentation for object detection: How to Rotate Bounding Boxes", , 18 September 2018 (2018-09-18), pages 1-21, XP093010150, PaperspaceBlog Retrieved from the Internet: URL:https://web.archive.org/web/2018091807 3144/https://blog.paperspace.com/data-augm entation-for-object-detection-rotation-and -shearing/ [retrieved on 2022-12-21]
• Anonymous: "Kosaku Kiroku fun to make", hatenablog , 5 December 2018 (2018-12-05), pages 1-9, XP055953820, Retrieved from the Internet: URL:http://mukopikmin.hatenablog.com/entry /2018/12/05/002339 [retrieved on 2020-08-31]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field

The present disclosure relates to a learning device and a learning method.

Background

In training data of machine learning, augmentation with respect to training data is known as a process to reduce deviation of data or increase a data count.

Citation List

Patent Literature

Patent Literature 1: JP 2009-217348 A
Patent Literature 2: JP 2013-161295 A
Patent Literature 3: JP 2016-062253 A

Summary

Technical Problem

Augmentation of an input image as training data may be performed using geometric image transformation such as affine transformation or projective transformation (homography transformation). However, a bounding box included in an image after the geometric image transformation is deformed from a bounding box included in an input image before the geometric image transformation. When machine learning is performed using the image including the deformed bounding box as it is as the training data, it will be difficult to generate a good learned model.

Therefore, the present disclosure proposes a technique capable of generating a good learned model. Prior art includes: US 2018/189596 A1; US 2018/033130A1; WANG KE ET AL: "Perspective Transformation Data Augmentation for Object Detection", IEEE ACCESS, IEEE, USA, vol. 8, 26 December 2019, pages 4935-4943; and Kathuria Ayoosh: "Data Augmentation for objection detection: How to Rotate Bounding Boxes" [online], 18 September 2018, pages 1-21 [retrieved on 2022-12-21 from <https://web.archive.org/web/20180918073144/ https://blog.paperspace.com/data-augmentation-for-object-detection-rotation-and-shearing/>]. Each of these prior art disclosures describes a prior art device.

Solution to Problem

Embodiments of the present disclosure are defined by the appended claims.

Brief Description of Drawings

FIG. 1 is a diagram illustrating a configuration example of a work management system according to a first embodiment of the present disclosure.
FIG. 2 is a diagram illustrating a configuration example of a first learning device according to the first embodiment of the present disclosure.
FIG. 3 is a diagram illustrating a configuration example of a work management device according to the first embodiment of the present disclosure.
FIG. 4 is a table indicating an example of procedure data according to the first embodiment of the present disclosure.
FIG. 5 is a diagram illustrating an operation example of a class setting unit according to the first embodiment of the present disclosure.
FIG. 6 is a graph illustrating an example of a keyword graph according to the first embodiment of the present disclosure.
FIG. 7 is a table indicating an example of a class table according to the first embodiment of the present disclosure.
FIG. 8 is a diagram illustrating an example of an input image to the first learning device according to the first embodiment of the present disclosure.

FIG. 9 is a diagram illustrating an example of the input image to the first learning device according to the first embodiment of the present disclosure.

FIG. 10 is a diagram illustrating an example of the input image to the first learning device according to the first embodiment of the present disclosure.

FIG. 11 is a diagram illustrating an example of the input image to the first learning device according to the first embodiment of the present disclosure.

FIG. 12 is a diagram illustrating an example of the input image to the first learning device according to the first embodiment of the present disclosure.

FIG. 13 is a diagram illustrating an example of augmentation by affine transformation according to the first embodiment of the present disclosure.

FIG. 14 is a diagram illustrating an example of augmentation by the affine transformation according to the first embodiment of the present disclosure.

FIG. 15 is a diagram illustrating an example of augmentation by the affine transformation according to the first embodiment of the present disclosure.

FIG. 16 is a diagram illustrating an operation example of a bounding box correction unit according to the first embodiment of the present disclosure.

FIG. 17 is a diagram illustrating an operation example of the bounding box correction unit according to the first embodiment of the present disclosure.

FIG. 18 is a diagram illustrating an operation example of the bounding box correction unit according to the first embodiment of the present disclosure.

FIG. 19 is a diagram illustrating an operation example of the bounding box correction unit according to the first embodiment of the present disclosure.

FIG. 20 is a diagram illustrating an operation example of the bounding box correction unit according to the first embodiment of the present disclosure.

FIG. 21 is a diagram illustrating an operation example of the bounding box correction unit according to the first embodiment of the present disclosure.

FIG. 22 is a diagram illustrating an operation example of the bounding box correction unit according to the first embodiment of the present disclosure.

FIG. 23 is a diagram illustrating an operation example of the bounding box correction unit according to the first embodiment of the present disclosure.

FIG. 24 is a diagram illustrating an example of an object detection model according to the first embodiment of the present disclosure.

FIG. 25 is a flowchart for explaining a processing procedure of the first learning device according to the first embodiment of the present disclosure.

FIG. 26 is a diagram illustrating an example of a state transition model according to the first embodiment of the present disclosure.

FIG. 27 is a table indicating an example of a work state according to the first embodiment of the present disclosure.

FIG. 28 is a table indicating an operation example of a work state determination unit according to the first embodiment of the present disclosure.

FIG. 29 is a diagram illustrating an example of a process management screen according to the first embodiment of the present disclosure.

FIG. 30 is a flowchart for explaining a processing procedure of the work management device according to the first embodiment of the present disclosure.

FIG. 31 is a diagram illustrating an operation example of a bounding box correction unit according to a second embodiment of the present disclosure.

FIG. 32 is a diagram illustrating an operation example of an image transformation unit according to a third embodiment of the present disclosure.

FIG. 33 is a diagram illustrating an operation example of the image transformation unit according to the third embodiment of the present disclosure.

FIG. 34 is a graph illustrating an operation example of a work state determination unit according to a fourth embodiment of the present disclosure.

FIG. 35 is a graph illustrating an operation example of the work state determination unit according to the fourth embodiment of the present disclosure.

FIG. 36 is a graph illustrating an operation example of the work state determination unit according to the fourth embodiment of the present disclosure.

FIG. 37 is a diagram illustrating a configuration example of a work management system according to a fifth embodiment of the present disclosure.

FIG. 38 is a diagram illustrating a configuration example of a second learning device according to the fifth embodiment of the present disclosure.

FIG. 39 is a diagram illustrating a configuration example of a work management device according to the fifth embodiment of the present disclosure.

FIG. 40 is a diagram illustrating an example of an input image to the second learning device according to the fifth embodiment of the present disclosure.

FIG. 41 is a diagram illustrating an example of the input image to the second learning device according to the fifth embodiment of the present disclosure.

FIG. 42 is a diagram illustrating an example of the input image to the second learning device according to the fifth embodiment of the present disclosure.

FIG. 43 is a diagram illustrating an example of the input image to the second learning device according to the fifth embodiment of the present disclosure.

FIG. 44 is a diagram illustrating an example of the input image to the second learning device according to the fifth embodiment of the present disclosure.

FIG. 45 is a diagram illustrating an example of the input image to the second learning device according to the fifth embodiment of the present disclosure.

FIG. 46 is a diagram illustrating an example of the input image to the second learning device according to the fifth embodiment of the present disclosure.

FIG. 47 is a diagram illustrating an example of the input image to the second learning device according to the fifth embodiment of the present disclosure.

FIG. 48 is a diagram illustrating an example of the input image to the second learning device according to the fifth embodiment of the present disclosure.

FIG. 49 is a diagram illustrating an example of the input image to the second learning device according to the fifth embodiment of the present disclosure.

FIG. 50 is a diagram illustrating an example of the input image to the second learning device according to the fifth embodiment of the present disclosure.

FIG. 51 is a diagram illustrating an example of the input image to the second learning device according to the fifth embodiment of the present disclosure.

FIG. 52 is a diagram illustrating an example of the input image to the second learning device according to the fifth embodiment of the present disclosure.

FIG. 53 is a diagram illustrating an example of the input image to the second learning device according to the fifth embodiment of the present disclosure.

FIG. 54 is a diagram illustrating an example of the input image to the second learning device according to the fifth embodiment of the present disclosure.

FIG. 55 is a diagram illustrating an example of the input image to the second learning device according to the fifth embodiment of the present disclosure.

FIG. 56 is a diagram illustrating an example of the input image to the second learning device according to the fifth embodiment of the present disclosure.

FIG. 57 is a diagram illustrating an example of the input image to the second learning device according to the fifth embodiment of the present disclosure.

FIG. 58 is a diagram illustrating an example of the input image to the second learning device according to the fifth embodiment of the present disclosure.

FIG. 59 is a diagram illustrating an example of position coordinates of an object according to a sixth embodiment of the present disclosure.

FIG. 60 is a diagram illustrating an example of the position coordinates of the object according to the sixth embodiment of the present disclosure.

FIG. 61 is a diagram illustrating an example of position coordinates of an object according to a seventh embodiment of the present disclosure.

FIG. 62 is a diagram illustrating an example of the position coordinates of the object according to the seventh embodiment of the present disclosure.

Description of Embodiments

Hereinafter, embodiments of the present disclosure will be described with reference to the drawings. Note that, in the following embodiments, the same parts or the same processes are denoted by the same reference signs, and redundant description may be omitted.

The present disclosure will be described according to the following item order.

[First embodiment]

<Configuration of work management system>
<Configuration of first learning device>
<Configuration of work management device>
<Processing procedure of first learning device>
<Processing procedure of work management device>

[Second embodiment]
<Operation of bounding box correction unit>
[Third embodiment]
<Operation of image transformation unit>
[Fourth embodiment]
<Operation of work state determination unit>
[Fifth embodiment]

<Configuration of work management system>
<Configuration of second learning device>
<Configuration of work management device>
<Processing procedure of second learning device>
<Processing procedure of work management device>

[Sixth embodiment]

<Operation of second machine learning unit>
<Processing procedure of work management device>

[Seventh embodiment]
<Operation of second machine learning unit>
[Eighth embodiment]
[Effects of disclosed technology]

[First embodiment]

<Configuration of work management system>

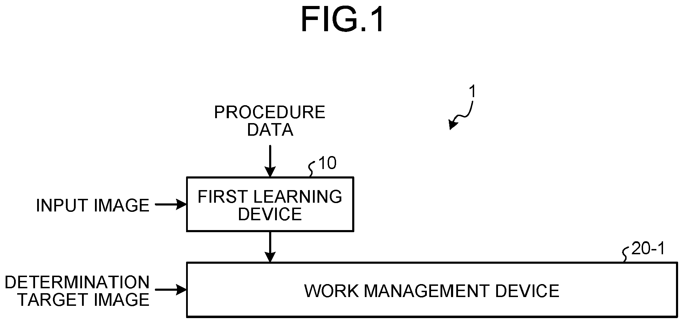

FIG. 1 is a diagram illustrating a configuration example of a work management system according to a first embodiment of the present disclosure. In FIG. 1, a work management system 1 includes a first learning device 10 and a work management device 20-1.

<Configuration of first learning device>

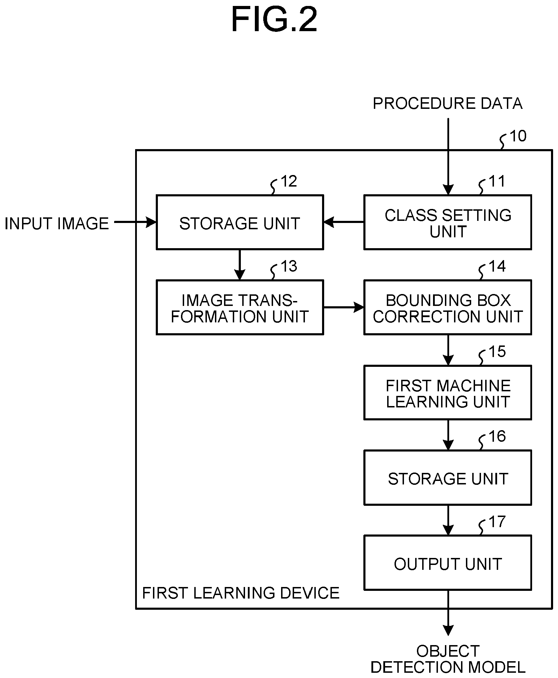

FIG. 2 is a diagram illustrating a configuration example of the first learning device according to the first embodiment of the present disclosure. In FIG. 2, the first learning device 10 includes a class setting unit 11, a storage unit 12, an image transformation unit 13, a bounding box correction unit 14, a first machine learning unit 15, a storage unit 16, and an output unit 17.

<Configuration of work management device>

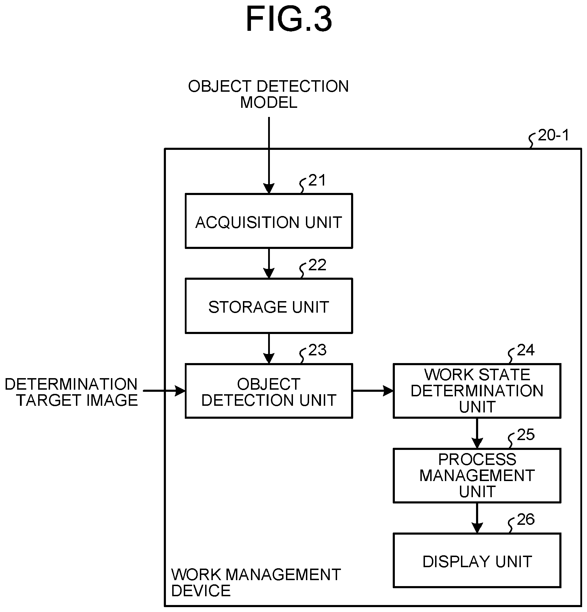

FIG. 3 is a diagram illustrating a configuration example of the work management device according to the first embodiment of the present disclosure. In FIG. 3, the work management device 20-1 includes an acquisition unit 21, a storage unit 22, an object detection unit 23, a work state determination unit 24, a process management unit 25, and a display unit 26.

<Processing procedure of first learning device>

Hereinafter, a smartphone will be described as an example of a product to be manufactured. A smartphone manufacturing work is formed of a plurality of work processes, and each of the plurality of work processes is formed of a plurality of work states.

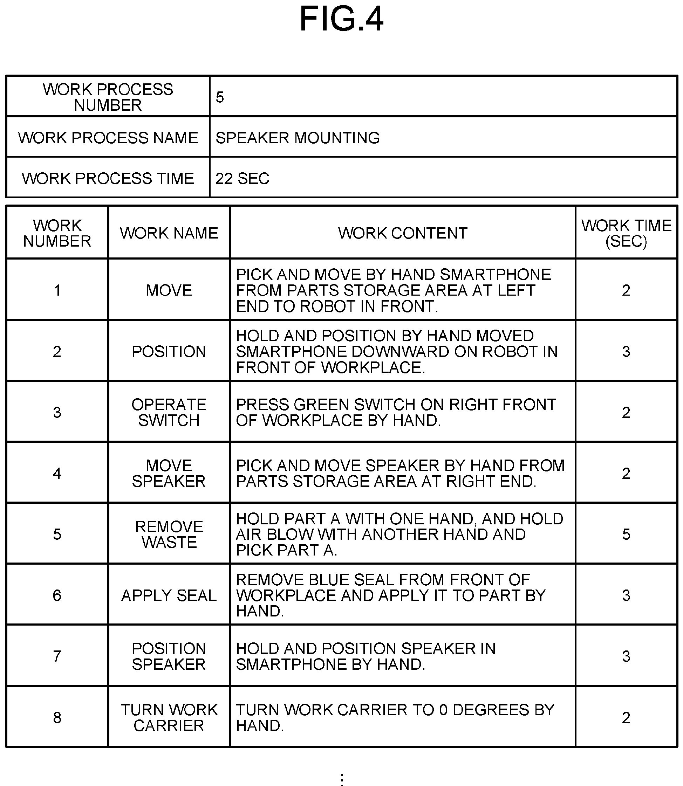

For example, data (hereinafter sometimes referred to as "procedure data") of a work procedure document indicating work procedures for "speaker mounting", which is one process among a plurality of work processes of the smartphone manufacturing work as illustrated in FIG. 4, is input to the class setting unit 11. For example, the work procedure in the work process of "speaker mounting" is performed, as illustrated in FIG. 4, in the order of "1: Move" → "2: Position" → "3: Operate switch" → and so on. FIG. 4 is a table indicating an example of the procedure data according to the first embodiment of the present disclosure.

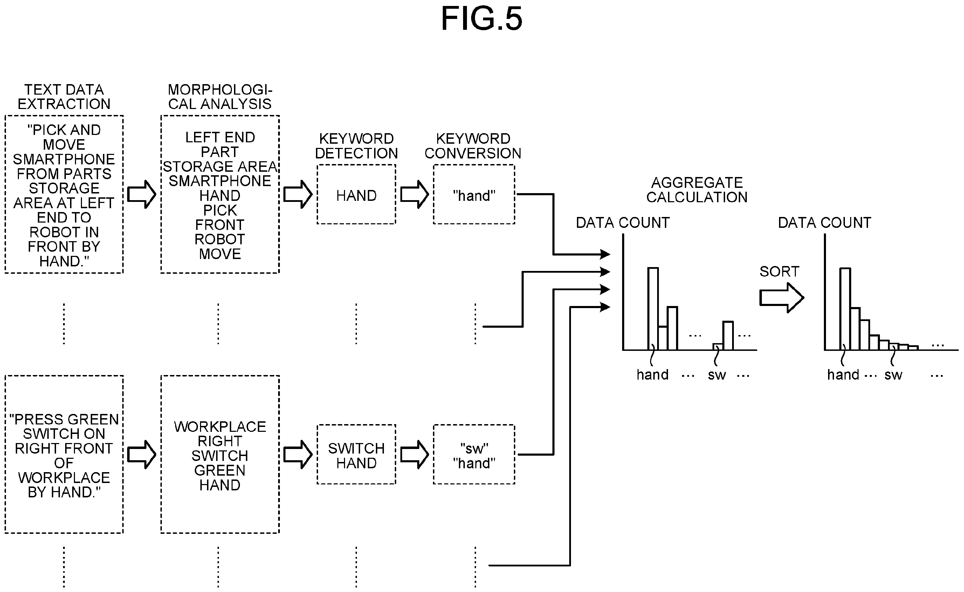

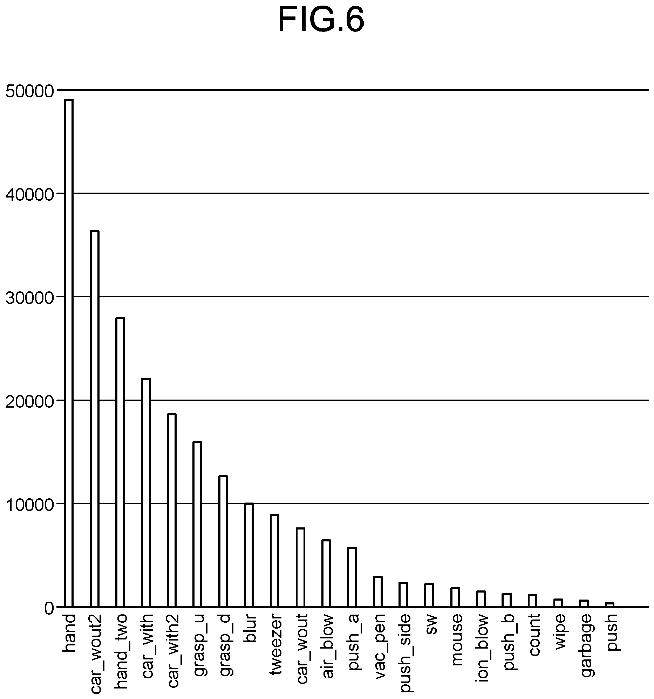

FIG. 5 is a diagram illustrating an operation example of the class setting unit according to the first embodiment of the present disclosure. As illustrated in FIG. 5, the class setting unit 11 first extracts text data of "work content" from the procedure data indicated in FIG. 4. Next, the class setting unit 11 performs morphological analysis on the extracted text data, and detects a keyword from the data after the morphological analysis. As a result, for example, a keyword "hand" is detected from the text data of the work content of "move" in a work number "1", and keywords "switch" and "hand" are detected from the text data of the work content of "Operate switch" in a work number "3". Next, the class setting unit 11 converts the detected keyword. For example, the keyword "hand" is converted into "hand", and the keyword "switch" is converted into "sw". Next, the class setting unit 11 aggregates data count of the converted keyword for each keyword in one work process of "speaker mounting". Next, the class setting unit 11 sorts the aggregated keywords in descending order of the data count. As a result, for example, a graph illustrated in FIG. 6 is obtained as a graph of keywords sorted in descending order of the data count (hereinafter sometimes referred to as a "keyword graph"). FIG. 6 is an example of the keyword graph according to the first embodiment of the present disclosure. The keyword graph illustrated in FIG. 6 includes, for example, a total of 22 keywords of "hand", "car_wout2", "hand_two", "car_with", "car_with2", "grasp_u", "grasp_d", "blur", "tweezer", "car_wout", "air_blow", "push_a", "vac_pen", "push_side", "sw", "mouse", "ion_blow", "push_b", "count", "wipes", "garbage", and "push" in descending order of the data count.

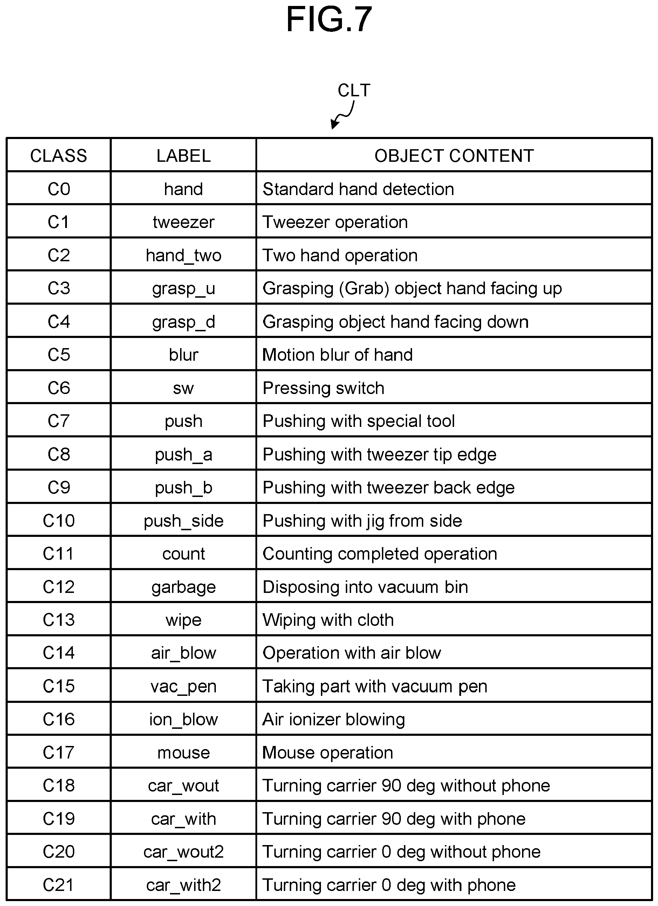

As illustrated in FIG. 7, the class setting unit 11 sets classes C0 to C21 using each of the 22 keywords in FIG. 6 as a "label", based on the keyword graph, and generates a "class table CLT" indicating association among the class, the label, and an object content. The class, the label, and the object content correspond one-to-one to each other. In addition, in the class table CLT, data count d(0) of the class C0 is the largest, and thereafter, the data count decreases in the order of data count d(1) of the class C1, data count d(2) of the class C2, and so on to data count d(20) of the class C20. The data count d(21) of the class C21 is the smallest. In this manner, the class setting unit 11 sets an element common to a plurality of works in one process as a class based on the work procedure document. FIG. 7 is an example of a class table according to the first embodiment of the present disclosure. Then, the class setting unit 11 outputs the keyword graph (FIG. 6) and the class table CLT (FIG. 7) to the storage unit 12, and the storage unit 12 stores the keyword graph and the class table CLT.

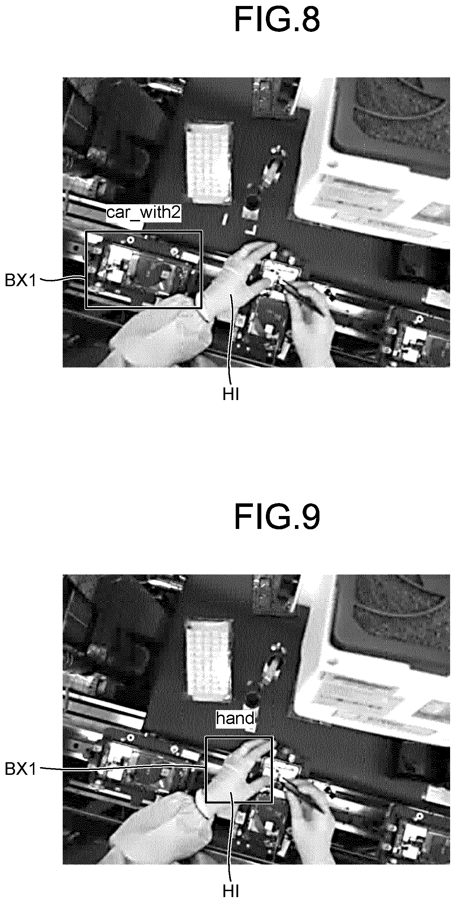

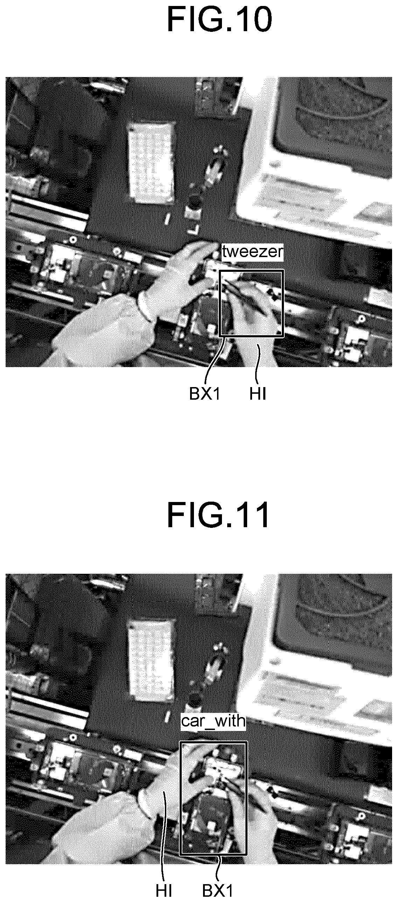

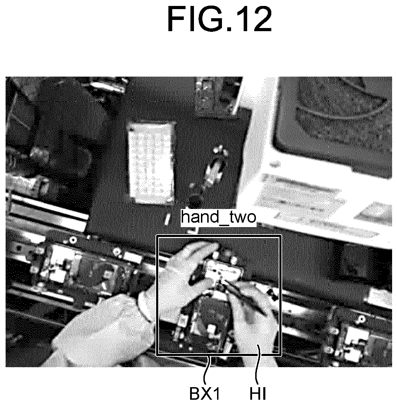

On the other hand, images as illustrated in FIG. 8 to FIG. 12 are input to the image transformation unit 13 as training data. FIG. 8 to FIG. 12 are examples of an input image to the first learning device according to the first embodiment of the present disclosure. As illustrated in FIG. 8 to FIG. 12, each input image to the first learning device 10 includes an image of a hand (hereinafter sometimes referred to as a "hand image") HI of a worker who is performing the smartphone manufacturing work, and a bounding box BX1 set for an object included in the input image. A label corresponding to the object in the bounding box BX1 is provided to the bounding box BX1. For example, the bounding box BX1 in the input image illustrated in FIG. 8 is labeled as "car_with2", the bounding box BX1 in the input image illustrated in FIG. 9 is labeled as "hand", the bounding box BX1 in the input image illustrated in FIG. 10 is labeled as "tweezer", the bounding box BX1 in the input image illustrated in FIG. 11 is labeled as "car_with", and the bounding box BX1 in the input image illustrated in FIG. 12 is labeled as "hand_two".

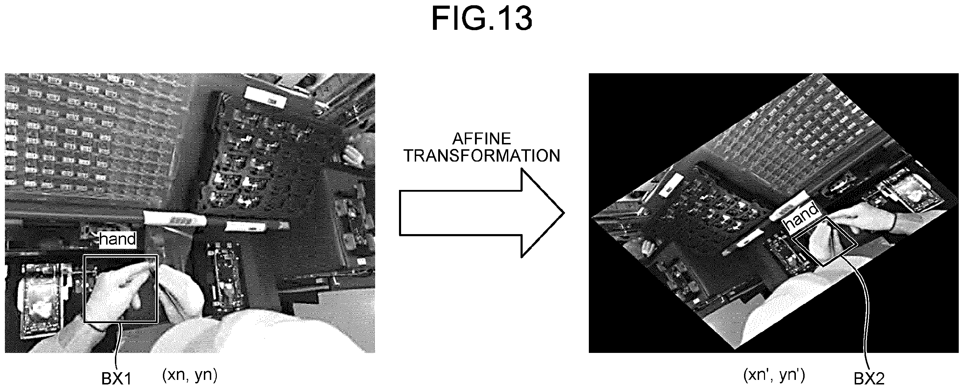

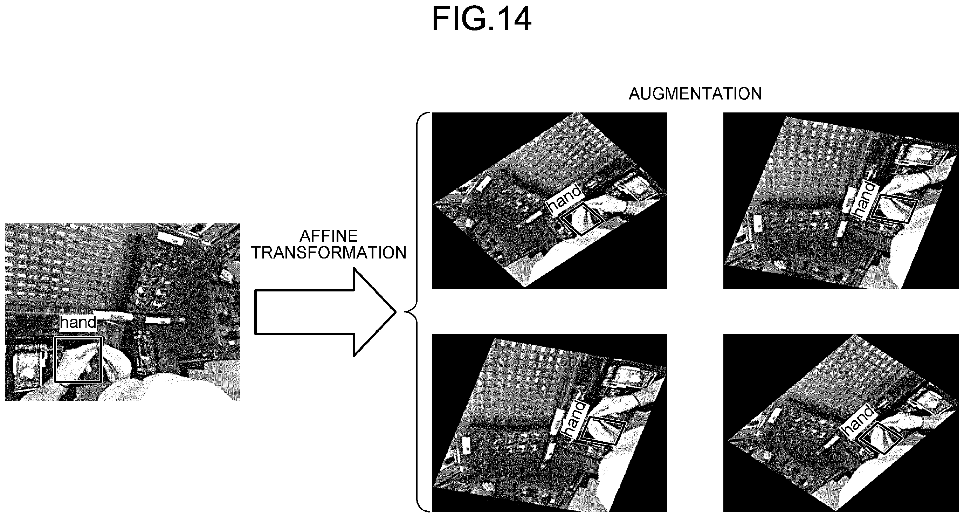

The image transformation unit 13 performs geometric image transformation on the input image to perform augmentation of the training data. An example of the geometric image transformation is affine transformation. For example, in a case where the affine transformation is used as the geometric image transformation, the image transformation unit 13 performs the affine transformation on each of the input images a predetermined plurality of times while randomly changing parameters an, bn, cn, dn, x0n, and y0n according to Formula (1), thereby performing the augmentation of the training data as illustrated in FIGS. 13 and 14. In Formula (1), xn and yn represent coordinates before image transformation, and xn' and yn' represent coordinates after image transformation.

$$\begin{bmatrix} xn' \\ yn' \\ 1 \end{bmatrix} = \begin{bmatrix} an & bn & x0n \\ cn & dn & y0n \\ 0 & 0 & 1 \end{bmatrix} \begin{bmatrix} xn \\ yn \\ 1 \end{bmatrix} \tag{1}$$

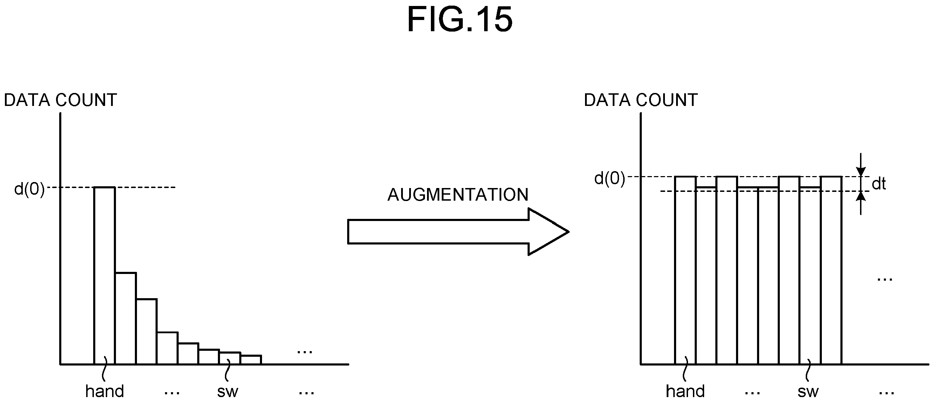

Furthermore, the image transformation unit 13 performs augmentation by performing the affine transformation on each input image for the number of times based on the keyword graph stored in the storage unit 12. For example, as illustrated in FIG. 15, the image transformation unit 13 performs augmentation on the input image including labels other than "hand" using the affine transformation such that absolute values of differences between the data count d(0) of "hand" that is the class with the largest data count and each of data counts of classes other than "hand" all fall within a predetermined value dt. FIG. 13 to FIG. 15 are diagrams illustrating an example of augmentation by the affine transformation according to the first embodiment of the present disclosure.

The image transformation unit 13 outputs an affine-transformed input image (hereinafter, sometimes referred to as a "transformed image") to the bounding box correction unit 14.

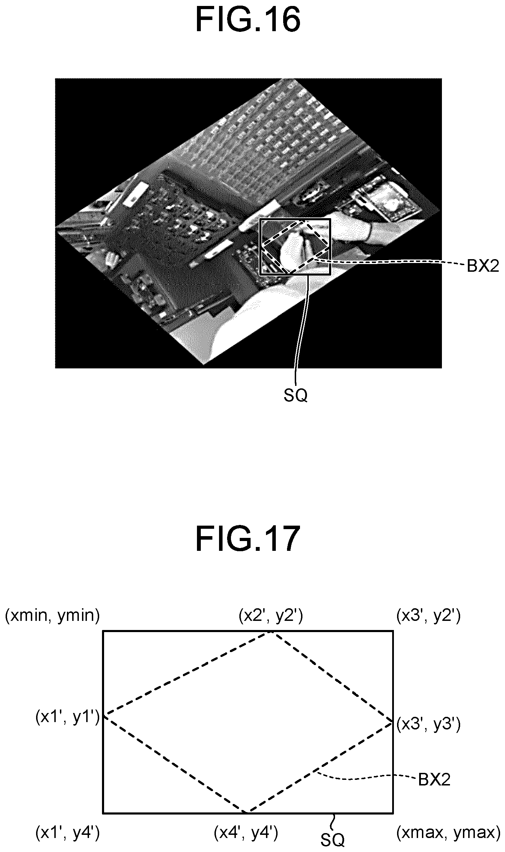

Along with the affine transformation of the input image, the bounding box BX1 included in the input image is deformed like a bounding box BX2 in the transformed image, as illustrated in FIG. 13. Therefore, the bounding box correction unit 14 corrects the bounding box as illustrated in FIG. 16 to FIG. 23. FIG. 16 to FIG. 23 are diagrams illustrating operation examples of the bounding box correction unit according to the first embodiment of the present disclosure.

For example, the bounding box correction unit 14 acquires coordinates (x1', y1'), (x2', y2'), (x3', y3'), and (x4', y4') of each of the four vertices of the bounding box BX2 deformed, as illustrated in FIG. 16, in the image after transformation (FIG. 17). Next, as illustrated in FIG. 17, the bounding box correction unit 14 generates a rectangle SQ in which coordinates of vertices of two points on a diagonal line are defined by [(xmin, ymin), (xmax, ymax)]. Here, "xmin" is the minimum value in x1', x2', x3', and x4', "ymin" is the minimum value in y1', y2', y3', and y4', "xmax" is the maximum value in x1', x2', x3', and x4', and "ymax" is the maximum value in y1', y2', y3', and y4'. As a result, the bounding box correction unit 14 generates a rectangle SQ including each of the four vertices of the bounding box BX2 in each of the four sides.

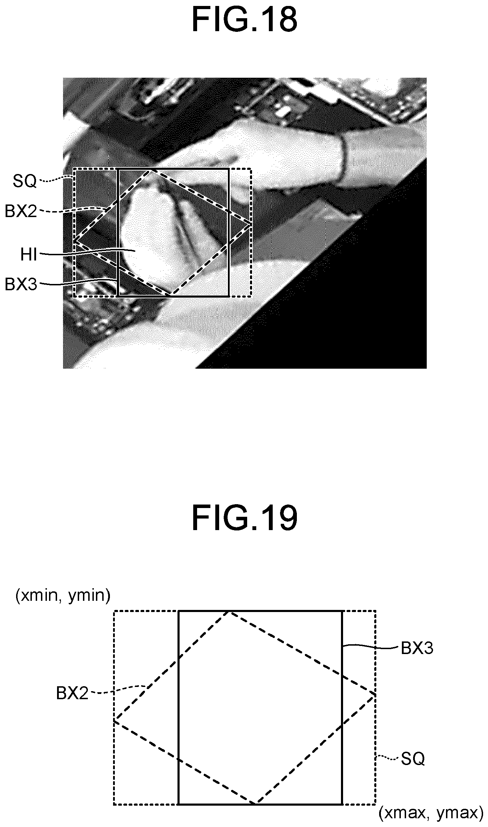

Next, as illustrated in FIGS. 18 and 19, the bounding box correction unit 14 generates a rectangular bounding box BX3 by reducing the area of the rectangle SQ based on a hand image HI included in the rectangle SQ, and sets the generated bounding box BX3 as the transformed image.

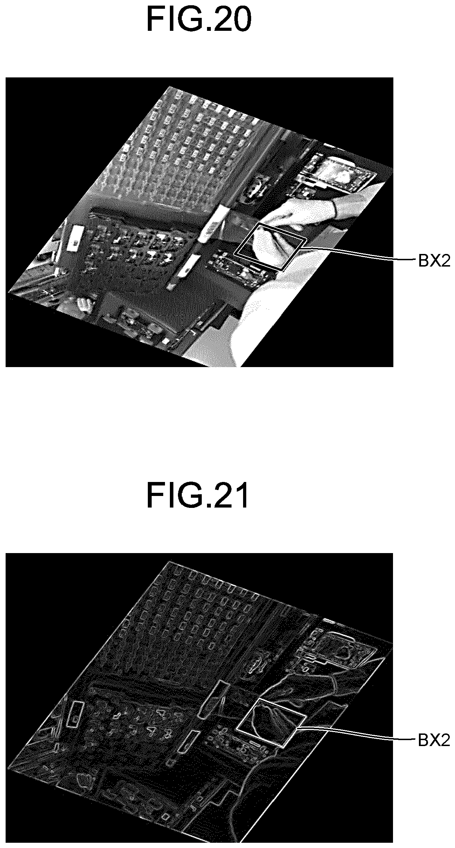

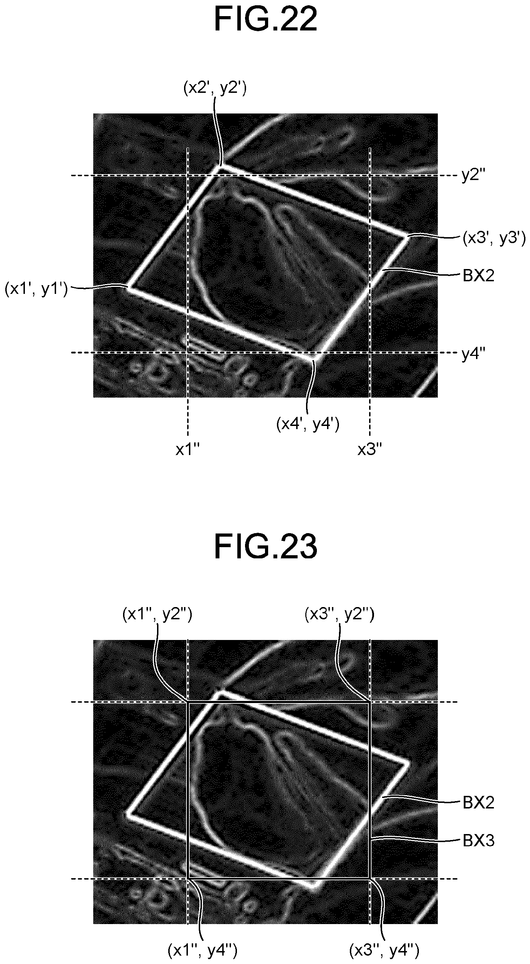

The bounding box correction unit 14 reduces the area of the rectangle SQ by using edge detection for the hand image HI existing in the rectangle SQ. The bounding box correction unit 14 acquires an edge-extracted image as illustrated in FIG. 21, for example, by applying general edge extraction process to the image after transformation as illustrated in FIG. 20. Next, as illustrated in FIG. 22, the bounding box correction unit 14 performs edge detection on the edge-extracted image starting from each of the four vertices (x1', y1'), (x2', y2'), (x3', y3'), and (x4', y4') of the bounding box BX2.

For example, in the edge-extracted image as illustrated in FIG. 22, the bounding box correction unit 14 acquires the X coordinate of an edge first detected from the vertex (x1', y1') toward the direction in which the value of the X coordinate increases (rightward in the drawing) as x1". Furthermore, the bounding box correction unit 14 acquires the X coordinate of an edge first detected from the vertex (x3', y3') toward the direction in which the value of the X coordinate decreases (leftward in the drawing) as x3". Furthermore, the bounding box correction unit 14 acquires the Y coordinate of an edge first detected from the vertex (x2', y2') toward the direction in which the value of the Y coordinate increases (downward in the drawing) as y2". Furthermore, the bounding box correction unit 14 acquires the Y coordinate of an edge first detected from the vertex (x4', y4') toward the direction in which the value of the Y coordinate decreases (upward in the drawing) as y4". Then, as illustrated in FIG. 23, the bounding box correction unit 14 generates the rectangular bounding box BX3 in which the coordinates of each of the four vertices are (x1", y2"), (x1", y4"), (x3", y2"), and (x3", y4"). The bounding box correction unit 14 generates the bounding box BX3 having an area smaller than that of the rectangle SQ (FIG. 19) in the rectangle SQ by generating, for example, the bounding box BX3 as illustrated in FIG. 20 to FIG. 23. Then, the bounding box correction unit 14 sets the generated bounding box BX3 as a transformed image instead of the bounding box BX2, and outputs the transformed image in which the bounding box BX3 is set to the first machine learning unit 15 as the training data.

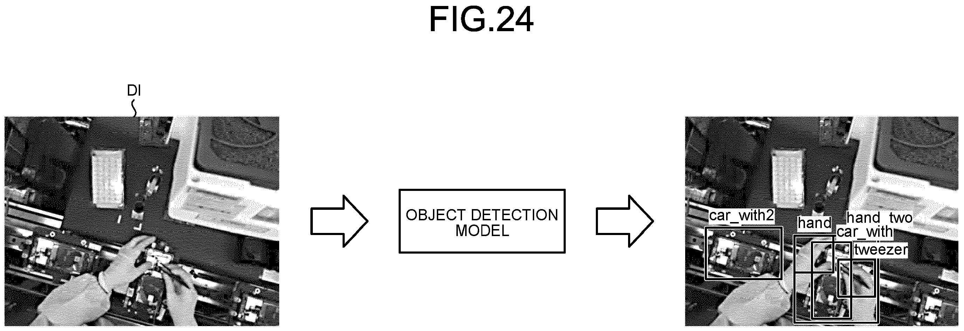

The first machine learning unit 15 performs machine learning using a plurality of transformed images each having the bounding box BX3 set therein as the training data to generate an "object detection model" as a first learned model, and outputs the generated object detection model to the storage unit 16. The storage unit 16 stores the object detection model. In other words, as illustrated in FIG. 24, the first machine learning unit 15 generates, with respect to a determination target image DI including the hand image, the object detection model that outputs a plurality of objects defining each of a plurality of work states forming one process of the smartphone manufacturing work. FIG. 24 illustrates, as an example, a case where five objects "car_with", "hand", "hand_two", "car _with", and "tweezer" are detected in the determination target image DI by the object detection model. As machine learning at the time of generating the object detection model, for example, a single shot multibox detector (SSD) or you only look once (YOLO) is used. FIG. 24 is a diagram illustrating an example of the object detection model according to the first embodiment of the present disclosure.

Here, the first machine learning unit 15 may generate 22 object detection models to detect an object of each class from the classes C0 to C 21 (FIG. 7), or may generate a single object detection model capable of collectively detecting 22 objects of the classes C0 to C 21.

The output unit 17 acquires the object detection model stored in the storage unit 16 from the storage unit 16, and outputs the acquired object detection model to the work management device 20-1.

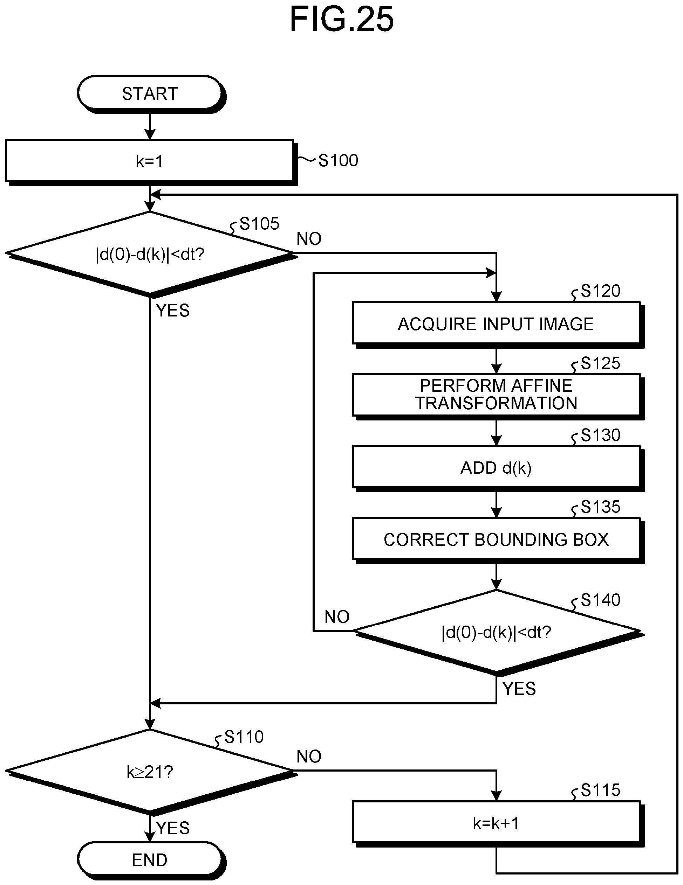

FIG. 25 is a flowchart for explaining a processing procedure of the first learning device according to the first embodiment of the present disclosure.

After the keyword graph (FIG. 6) and the class table CLT (FIG. 7) are obtained, the first learning device 10 initializes a class number k to "1" in Step S100 in FIG. 25.

Next, in Step S105, the first learning device 10 determines whether or not an absolute value of a difference between the data count d(0) of the class C0 and the data count d(k) of the class Ck (hereinafter sometimes referred to as an "inter-class difference") is less than the predetermined value dt. When the inter-class difference is less than dt (Step S105: Yes), the process proceeds to Step S110, and if the inter-class difference is equal to or greater than dt (Step S105: No), the process proceeds to Step S120.

Since the class with the largest number set in the class table CLT (FIG. 7) is the class C21, the first learning device 10 determines whether or not the class number k has reached "21" in Step S110. When the class number k has reached "21" (Step S110: Yes), the process ends. On the other hand, in a case where the class number k has not reached "21", that is, in a case where the class number k is less than "21" (Step S110: No), the process proceeds to Step S115, and the first learning device 10 increments the class number k in Step S115. After the process in Step S115, the process returns to Step S105.

On the other hand, in Step S120, the first learning device 10 acquires the input image as the training data.

Next, in Step S125, the first learning device 10 performs the affine transformations on the input image acquired in Step S120 for a predetermined plurality of times while randomly changing affine transformation parameters, thereby performing augmentation of the training data.

Next, in Step S130, the first learning device 10 adds the number of times of affine transformation in Step S125 to the data count d(k).

Next, in Step S135, the first learning device 10 corrects the bounding box (FIG. 16 to FIG. 23).

Next, in Step S140, the first learning device 10 determines whether or not the inter-class difference is less than the predetermined value dt. When the inter-class difference is less than dt (Step S140: Yes), the process proceeds to Step S110. On the other hand, when the inter-class difference is equal to or larger than dt (Step S140: No), the process returns to Step S120, and a new input image is acquired in Step S120.

<Processing procedure of work management device>

In the work management device 20-1 illustrated in FIG. 3, the acquisition unit 21 acquires the object detection model output from the first learning device 10 and outputs the acquired object detection model to the storage unit 22, and the storage unit 22 stores the object detection model.

On the other hand, a determination target image, which is an object detection target and a work state determination target, is input to the object detection unit 23. The determination target image is an image for each frame of a video image in which the work state of the worker performing the smartphone manufacturing work is captured at a predetermined frame rate. The object detection unit 23 detects a plurality of objects in the determination target image by using the object detection model stored in the storage unit 22, and outputs the plurality of detected objects to the work state determination unit 24.

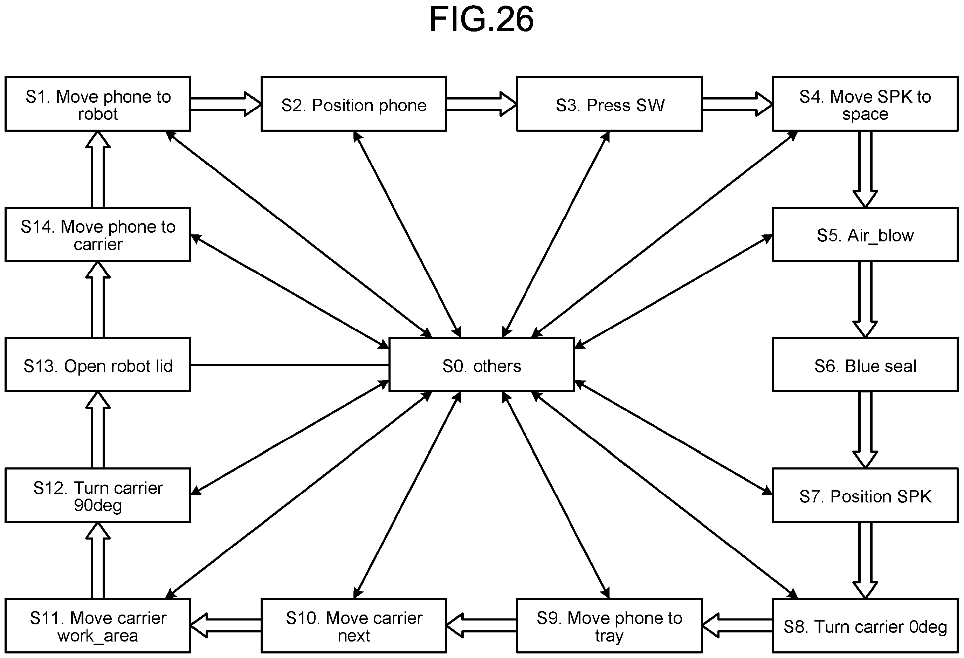

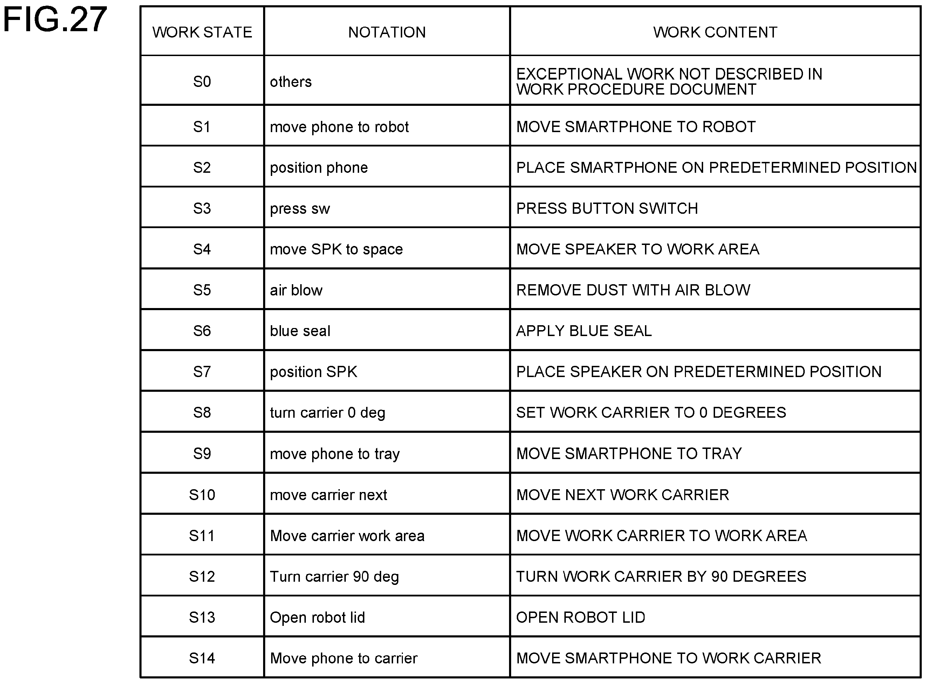

Here, for example, "speaker mounting" that is one process among a plurality of work processes forming the smartphone manufacturing work is formed by work states S1 to S14 illustrated in FIGS. 26 and 27. In other words, the work state of the worker who mounts the speaker sequentially transitions from S1 → S2 → S3 → S4 → S5 → S6 → S7 → S8 → S9 → S10 → S11 → S12 → S13 → S14 → S1 → S2 → and so on as in a transition model of the work state illustrated in FIG. 26 (hereinafter sometimes referred to as a "state transition model"). In addition, a work state S0 is defined as an exceptional work state that does not correspond to any of the work states S1 to S14. FIG. 26 is a diagram illustrating an example of the state transition model according to the first embodiment of the present disclosure, and FIG. 27 is a table indicating an example of work states according to the first embodiment of the present disclosure. The state transition model illustrated in FIG. 26 is preset in the work state determination unit 24.

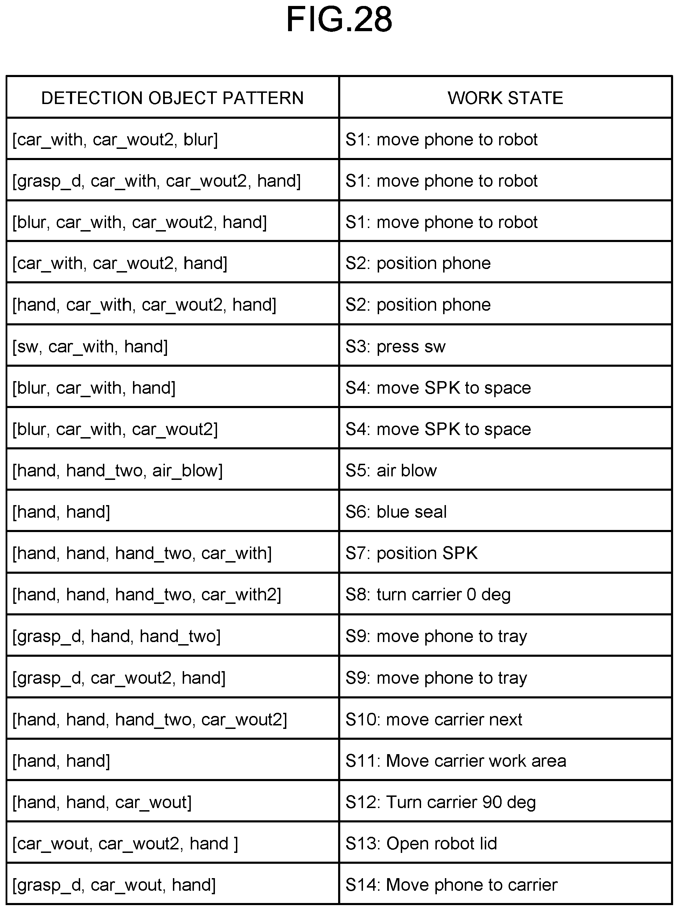

The work state determination unit 24 determines the work state indicated by the determination target image based on the plurality of objects detected by the object detection unit 23, and outputs any one of "S0" to "S14", which is information indicating any one of the plurality of work states, to the process management unit 25 as a determination result of the work state. For example, as illustrated in FIG. 28, the work state determination unit 24 determines the work state corresponding to a pattern of a plurality of objects detected by the object detection unit 23 (hereinafter sometimes referred to as a "detection object pattern") as the work state indicated by the determination target image. For example, when the detected object pattern is [car_with, car_wout2, blur], [grasp_d, car _with, car_wout2, and hand], or [blur, car_with, car_wout2, hand], it is determined that the work state is "S1: Move phone to robot". When the detected object pattern is [car_with, car_wout2, hand] or [hand, car_with, car_wout2, hand], it is determined that the work state is "S2: Position phone". When the detected object pattern is [sw, car_with, hand], it is determined that the work state is "S3: Press SW". When the detected object pattern does not correspond to any of the patterns illustrated in FIG. 28, it is determined that the work state is "S0: others". FIG. 28 is a table indicating an operation example of the work state determination unit according to the first embodiment of the present disclosure.

Here, in FIG. 28, the detected object pattern [hand, hand] corresponds to both the work state S6 and the work state S11. On the other hand, according to the state transition model illustrated in FIG. 26, the work state immediately before transitioning to the work state S6 is either S5 or S0, and the work state immediately before transitioning to the work state S11 is either S10 or S0. The work state may be continued in S6 or S10.

Therefore, when the detection object pattern in the current determination target image is [hand, hand] and the work state determined from the previous determination target image is S5 or S6, the work state determination unit 24 determines that the current work state (in other words, the work state indicated by the current determination target image) is S6. When the detected object pattern in the current determination target image is [hand, hand] and the work state determined from the previous determination target image is S0 and also when the work state determined from the previous determination target image is S5 or the work state before the work state transitions to S0 is S6, the work state determination unit 24 determines that the current work state is S6.

Further, when the detected object pattern in the current determination target image is [hand, hand] and the work state determined from the previous determination target image is S10 or S11, the work state determination unit 24 determines that the current work state is S11. When the detected object pattern in the current determination target image is [hand, hand] and the work state determined from the previous determination target image is S0 and also when the work state determined from the previous determination target image is S10 or the work state before the work state transitions to S0 is S11, the work state determination unit 24 determines that the current work state is S11.

In this manner, the work state determination unit 24 determines the work state indicated by the determination target image by using the state transition model (FIG. 26) representing the anteroposterior relationship of the plurality of work states. Thus, the determination accuracy of the work state can be enhanced.

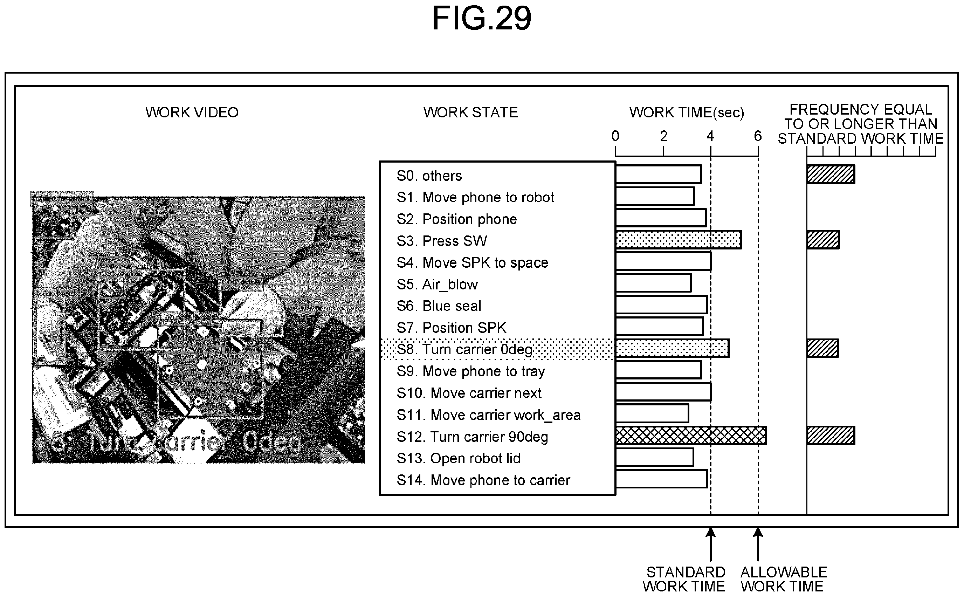

The process management unit 25 generates a screen for managing the work process (hereinafter sometimes referred to as a "process management screen") based on the determination result in the work state determination unit 24, and displays the generated process management screen on the display unit 26. FIG. 29 is a diagram illustrating an example of the process management screen according to the first embodiment of the present disclosure. In FIG. 29, a process management screen MS includes, for example, an item of "work video", an item of "work state", an item of "work time", and an item of "frequency equal to or longer than standard work time" as display items In the item of "work video", a detection result of the object and a determination result of the work state are superimposed on the determination target image in real time and displayed together with the determination target image. In the item "work state", a determination result of the work state is highlighted. In the item of "work time", the latest work time of each of the work states S0 to S14 is displayed in a bar graph. For the work time of each of the work states S0 to S14, a standard work time per work state and an allowable work time per work state are predetermined. For example, the process management unit 25 displays the work time within the standard work time as a blue bar graph, displays the work time exceeding the standard work time as a yellow bar graph, and displays the work time exceeding the allowable work time as a red bar graph. In the item of "frequency equal to or longer than standard work time", the cumulative number of times the work time exceeds the standard work time is displayed in a bar graph for each of the work states S0 to S14.

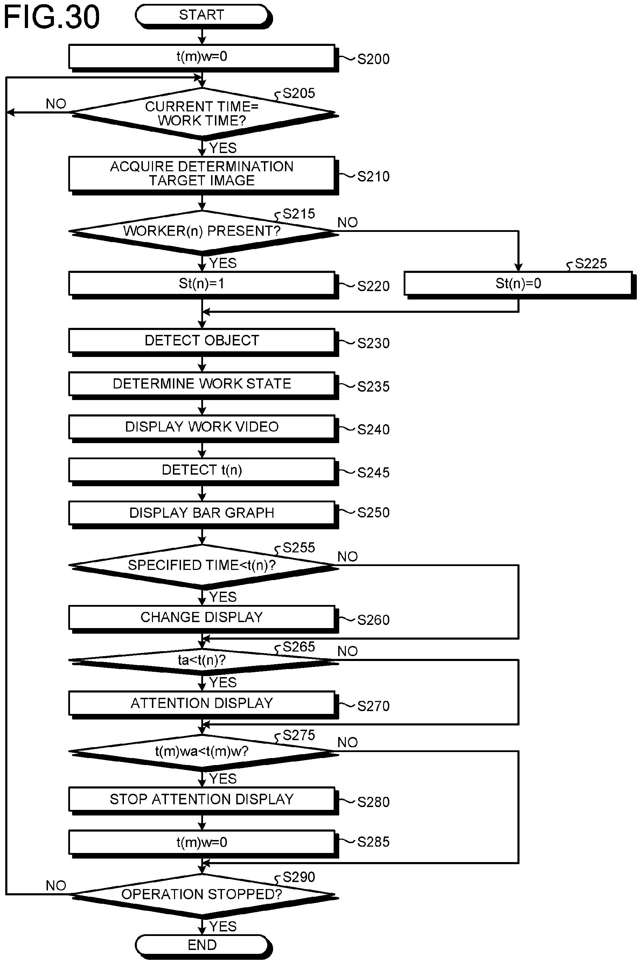

FIG. 30 is a flowchart for explaining a processing procedure of the work management device according to the first embodiment of the present disclosure.

In Step S200 in FIG. 30, the work management device 20-1 initializes an attention display time t(m)w to "0".

Next, in Step S205, the work management device 20-1 determines whether the current time is within the work time. The work management device 20-1 waits until the current time reaches the work time (Step S205: No). Then, when the current time is within the work time (Step S205: Yes), the process proceeds to Step S210.

In Step S210, the work management device 20-1 acquires a determination target image.

Next, in Step S215, the work management device 20-1 determines whether a worker(n) in a process n (where n is the work process number) is present at a work site. The presence or absence of the worker (n) is determined based on, for example, whether the head or hand of the worker (n) is included in the determination target image. When the worker (n) is present at the work site (Step S215: Yes), the process proceeds to Step S220, and when the worker (n) is not present at the work site (Step S215: No), the process proceeds to Step S225.

In Step S220, the work management device 20-1 sets a worker flag St (n) to "1". On the other hand, in Step S225, the work management device 20-1 sets the worker flag St (n) to "0". After the process in steps S220 and S225, the process proceeds to Step S230.

In Step S230, the work management device 20-1 performs object detection on the determination target image.

Next, in Step S235, the work management device 20-1 determines the work state indicated by the determination target image based on the object detected in Step S230.

Next, in Step S240, the work management device 20-1 displays the work video on the process management screen (FIG. 29).

Next, in Step S245, the work management device 20-1 detects a work time t (n) spent for the work of the process n for each of the work states S0 to S14.

Next, in Step S250, the work management device 20-1 displays the work time t (n) for each work state in a bar graph in the item "work time" on the process management screen (FIG. 29).

Next, in Step S255, the work management device 20-1 determines whether or not the work time t (n) for each work state is within a specified time. The specified time in Step S255 is, for example, "standard work time" and "allowable work time" in FIG. 29.

For the work state in which the work time t (n) is not within the specified time (Step S255: Yes), the work management device 20-1 changes the display of the bar graph in Step S260. For example, the work management device 20-1 changes the color of the bar graph of the work time for the work state exceeding the standard work time from blue to yellow, and changes the color of the bar graph of the work time for the work state exceeding the allowable work time from yellow to red. After the process in Step S260, the process proceeds to Step S265.

On the other hand, when the work times t (n) for all the work states are within the specified time (Step S255: No), the process proceeds to Step S265 without performing the process in Step S260.

In Step S265, the work management device 20-1 determines whether the work time t (n) for any of the work states exceeds a predetermined call attention time ta.

When the work time t (n) for any of the work states exceeds the call attention time ta (Step S265: Yes), the work management device 20-1 starts attention display in Step S270. In addition, the work management device 20-1 starts to measure the attention display time t (m) w with the start of the attention display. For example, the work management device 20-1 performs attention display such as "Please delay the operation by oo seconds" in each process m before the process n that includes a work affecting a work in the process n. After the process in Step S270, the process proceeds to Step S275.

On the other hand, when the work times t (n) for all the work states are within the call attention time ta (Step S265: No), the process proceeds to Step S275 without performing the process in Step S270.

In Step S275, the work management device 20-1 determines whether the attention display time t (m) w has reached a predetermined elapsed time t (m) wa.

When the attention display time t (m) w has reached the elapsed time t (m) wa (Step S275: Yes), the work management device 20-1 ends the attention display in Step S280, and initializes the attention display time t (m) w to "0" in Step S285. After the process in Step S285, the process proceeds to Step S290.

On the other hand, when the attention display time t (m) w has not reached the elapsed time t (m) wa (Step S275: No), the process proceeds to Step S290 without performing the process in Steps S280 and S285.

In Step S290, the work management device 20-1 determines whether or not an operation stop instruction of the work management device 20-1 has been issued. When the operation stop instruction is issued (Step S290: Yes), the work management device 20-1 stops the operation. On the other hand, when the operation stop instruction has not been issued (Step S290: No), the process returns to Step S205.

The first embodiment of the present disclosure has been described above.

[Second embodiment]

<Operation of bounding box correction unit>

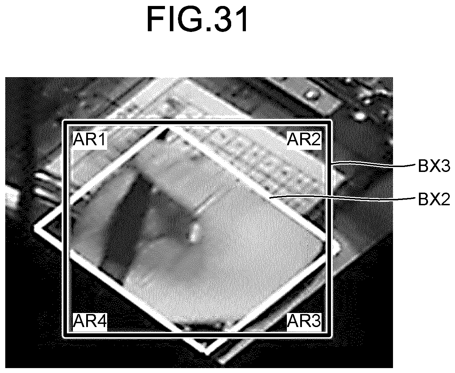

FIG. 31 is a diagram illustrating an operation example of the bounding box correction unit according to the second embodiment of the present disclosure.

As illustrated in FIG. 31, the bounding box correction unit 14 specifies four areas AR1, AR2, AR3, and AR4 surrounded by the outside of the bounding box BX2 and the inside of the bounding box BX3 in each of the plurality of transformed images. Furthermore, in each of the areas AR1, AR2, AR3, and AR4, the bounding box correction unit 14 calculates a ratio of pixels having luminance less than a threshold among the pixels included in each area (hereinafter sometimes referred to as "low luminance pixel rate"). Then, the bounding box correction unit 14 excludes, from the training data, a transformed image in which at least one area having a low luminance pixel rate of a predetermined value or more exists in the areas AR1, AR2, AR3, and AR4 among the plurality of transformed images. This is because the transformed image including at least one area where the low luminance pixel rate is equal to or greater than the predetermined value in the areas AR1, AR2, AR3, and AR4 includes a large area with invalid feature amount. In this way, the reliability of the transformed image as the training data can be enhanced.

The second embodiment of the present disclosure has been described above.

[Third embodiment]

<Operation of image transformation unit>

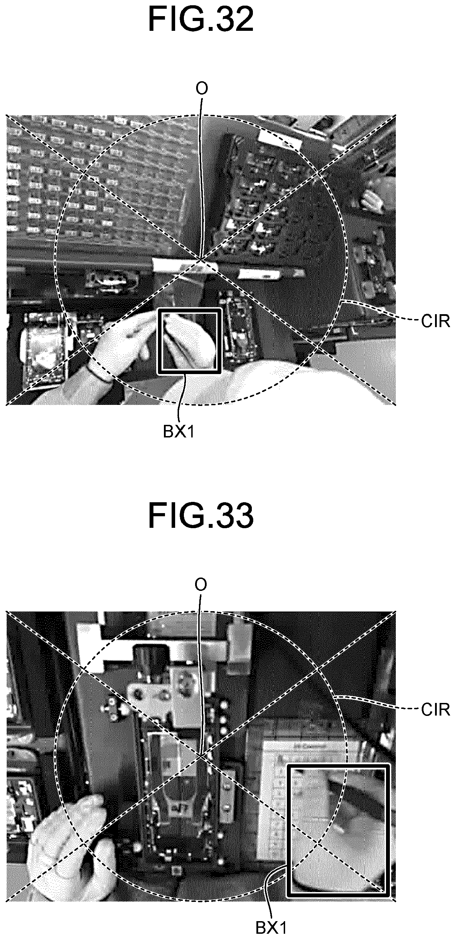

FIGS. 32 and 33 are diagrams illustrating operation examples of the image transformation unit according to the third embodiment of the present disclosure.

As illustrated in FIG. 32 and FIG. 33, with respect to the input image, the image transformation unit 13 sets a circle CIR that is centered on a center O of the input image and is in contact with an upper side and a lower side of the input image or a left side and a right side of the input image. Then, the image transformation unit 13 selects the input image in which the entire area of the bounding box BX1 is included in an area of the circle CIR as a transformation target of the affine transformation, and excludes the input image in which the area of the bounding box BX1 is outside the area of the circle CIR from the transformation target of the affine transformation. Therefore, the image transformation unit 13 selects the input image illustrated in FIG. 32 as the transformation target of the affine transformation, and excludes the input image illustrated in FIG. 33 from the transformation target of the affine transformation. This is because that a large area with invalid feature amount may be included in the transformed image of the input image whose bounding box BX1 exists outside the area of the circle CIR. In this way, the reliability of the transformed image as the training data can be enhanced.

The third embodiment of the present disclosure has been described above.

Here, in the above description, a case where the image transformation unit 13 performs the augmentation of the training data using the affine transformation has been described. However, the geometric image transformation used by the image transformation unit 13 is not limited to the affine transformation. An example of the geometric image transformation other than the affine transformation is a projective transformation (homography transformation). For example, in a case where the projective transformation is used as the geometric image transformation, the image transformation unit 13 performs the projective transformation of each of the input images for a predetermined plurality of times while randomly changing parameters k, h11, h12, h13, h21, h22, h23, h31, h32, and h33 according to Formula (2) or Formulas (3a) and (3b), thereby performing the augmentation of the training data. In Formulas (2), (3a), and (3b), xn and yn represent coordinates before image transformation, and xn' and yn' represent coordinates after image transformation.

$$k \begin{bmatrix} xn' \\ yn' \\ 1 \end{bmatrix} = \begin{bmatrix} h11 & h12 & h13 \\ h21 & h22 & h23 \\ h31 & h32 & h33 \end{bmatrix} \begin{bmatrix} xn \\ yn \\ 1 \end{bmatrix} \qquad (2)$$

$$xn' = \frac{h11xn + h12yn + h13}{h31xn + h32yn + h33} \qquad (3a)$$

$$yn' = \frac{h21xn + h22yn + h23}{h31xn + h32yn + h33} \qquad (3b)$$

[Fourth embodiment]

<Operation of work state determination unit>

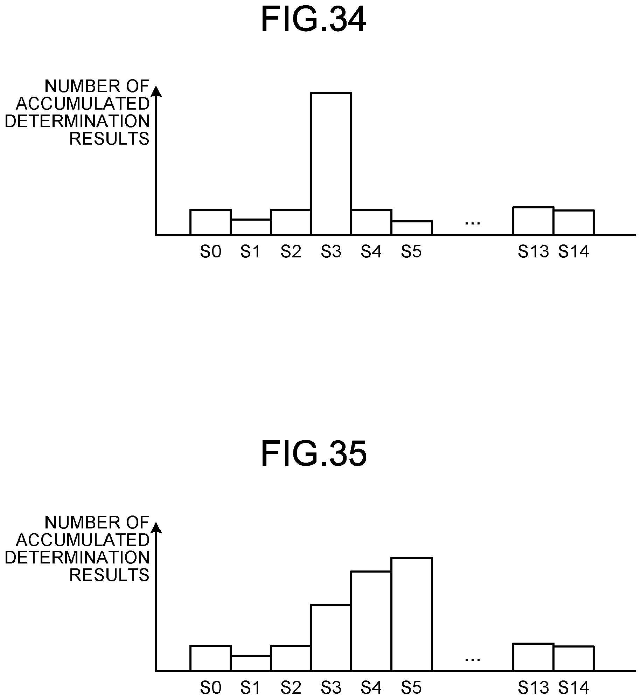

FIG. 34 to FIG. 36 are graphs illustrating operation examples of the work state determination unit according to the fourth embodiment of the present disclosure.

As illustrated in FIG. 34 to FIG. 36, the work state determination unit 24 accumulates determination results of the work states S0 to S14 with respect to the determination target image for each frame. In other words, graphs illustrated in FIG. 34 to FIG. 36 illustrate a cumulative result of past determination results in the work state determination unit 24.

For example, when the cumulative result of the determination results at the time when the work state determination unit 24 determines that the work state with respect to the determination target image in the m-th frame is as illustrated in FIG. 34, the work state determination unit 24 determines that the work state S3 having the largest cumulative number of determination results is the work state indicated by the determination target image in the m-th frame.

Further, for example, when the cumulative result of the determination results at the time when the work state determination unit 24 determines that the work state with respect to the determination target image in the (m + 1)-th frame is as illustrated in FIG. 35, the work state having the largest cumulative number of determination results is S5. However, according to the state transition model (FIG. 26), the work state does not transition from S3 to S5. Therefore, the work state determination unit 24 selects S4 in which the cumulative number of determination results is the second largest after S5 as a candidate determination result. According to the state transition model, since the work state can transition to S4 after S3, the work state determination unit 24 finally determines the work state S4 as the work state indicated by the determination target image in the (m + 1)-th frame.

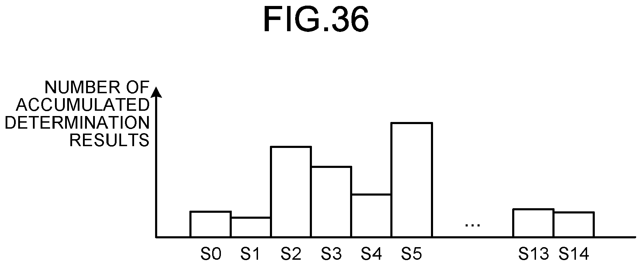

Further, for example, when the cumulative result of the determination results at the time when the work state determination unit 24 determines that the work state with respect to the determination target image in the (m + 1)-th frame is as illustrated in FIG. 36, the work state having the largest cumulative number of determination results is S5, and the work state having the second largest cumulative number of determination results is S2. According to the state transition model, the work state does not transition to S5 after S3, and does not transition to S2 after S3. Therefore, the work state determination unit 24 determines that the work state S3 in which the cumulative number of determination results is the third largest is the work state indicated by the determination target image in the (m + 1)-th frame.

Thus, the determination accuracy of the work state can be enhanced.

The fourth embodiment of the present disclosure has been described above.

[Fifth embodiment]

<Configuration of work management system>

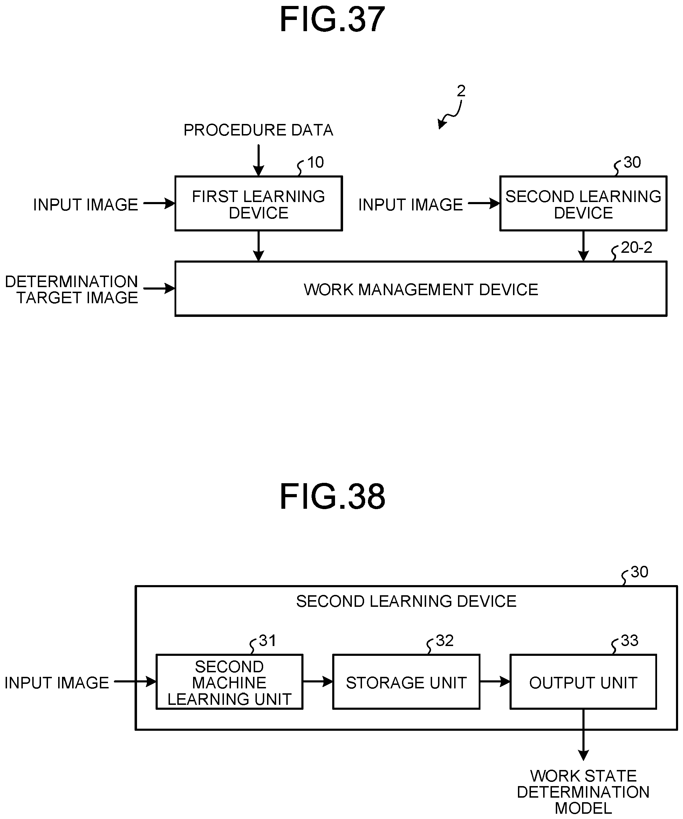

FIG. 37 is a diagram illustrating a configuration example of the work management system according to the fifth embodiment of the present disclosure. In FIG. 37, a work management system 2 includes the first learning device 10, a second learning device 30, and a work management device 20-2.

<Configuration of second learning device>

FIG. 38 is a diagram illustrating a configuration example of the second learning device according to the fifth embodiment of the present disclosure. In FIG. 38, the second learning device 30 includes a second machine learning unit 31, a storage unit 32, and an output unit 33.

<Configuration of work management device>

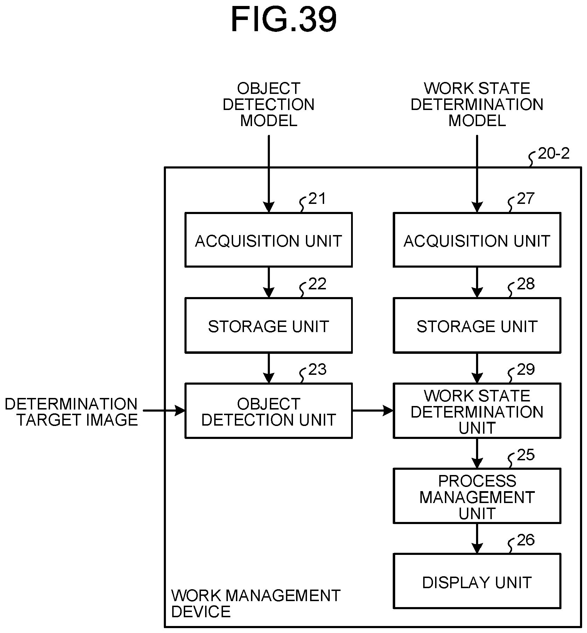

FIG. 39 is a diagram illustrating a configuration example of the work management device according to the fifth embodiment of the present disclosure. In FIG. 39, the work management device 20-2 includes acquisition units 21 and 27, storage units 22 and 28, the object detection unit 23, a work state determination unit 29, the process management unit 25, and the display unit 26.

<Processing procedure of second learning device>

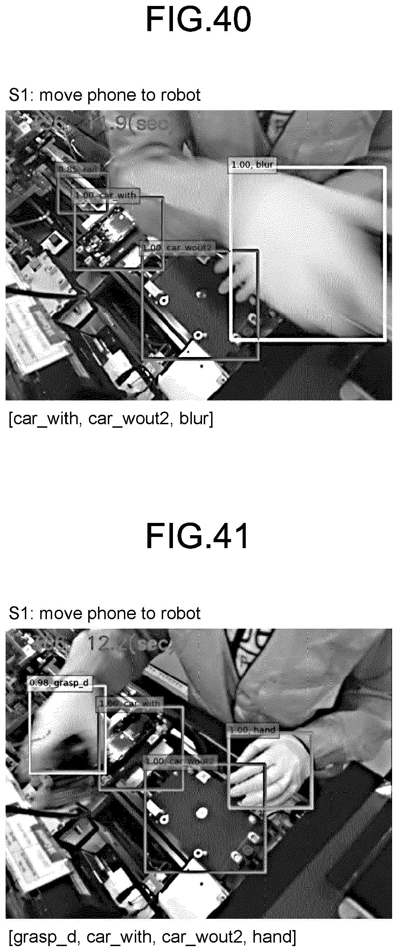

In the second learning device 30 illustrated in FIG. 38, images as illustrated in FIG. 40 to FIG. 58 are input to the second machine learning unit 31 as the training data. FIG. 40 to FIG. 58 are diagrams illustrating examples of input images to the second learning device according to the fifth embodiment of the present disclosure. As illustrated in FIG. 40 to FIG. 58, each input image to the second learning device 30 includes a hand image and a bounding box set to an object included in the input image. Similarly to the input image to the first learning device 10 (FIG. 8 to FIG. 12), a label corresponding to an object in the bounding box is attached to the bounding box. In addition, as illustrated in FIG. 40 to FIG. 58, each input image to the second learning device 30 is provided with a label indicating a work state indicated by each input image (hereinafter sometimes referred to as a "work state label").

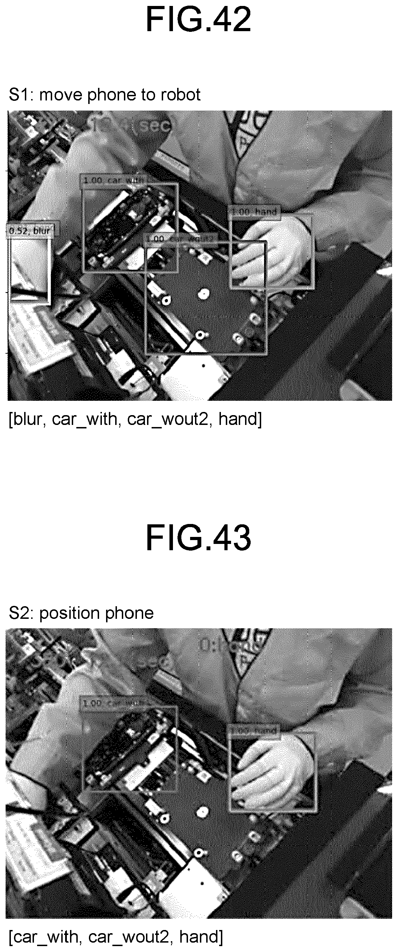

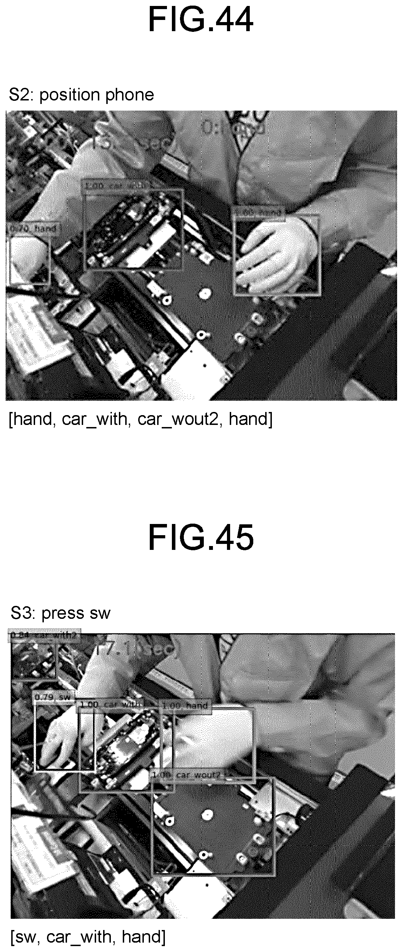

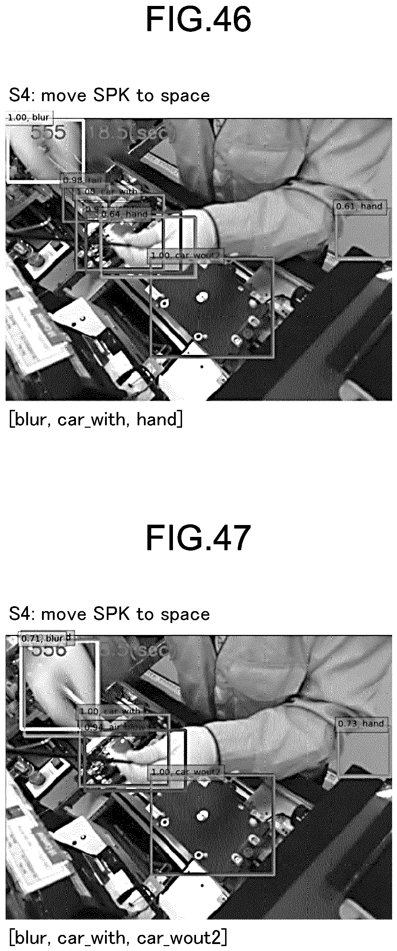

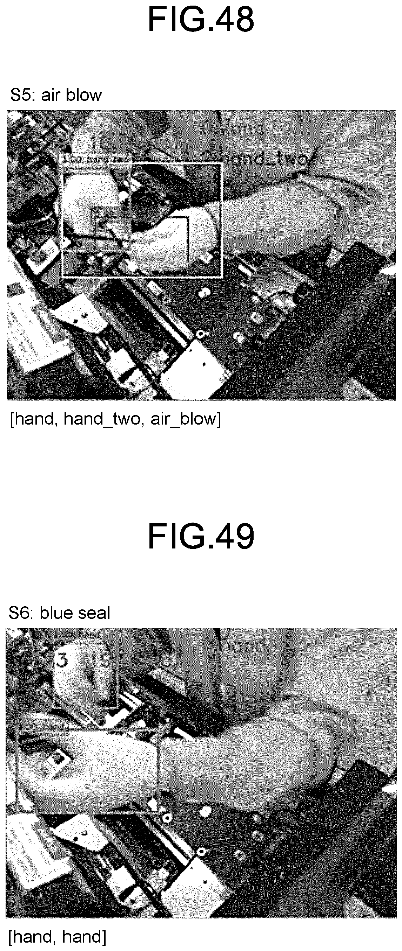

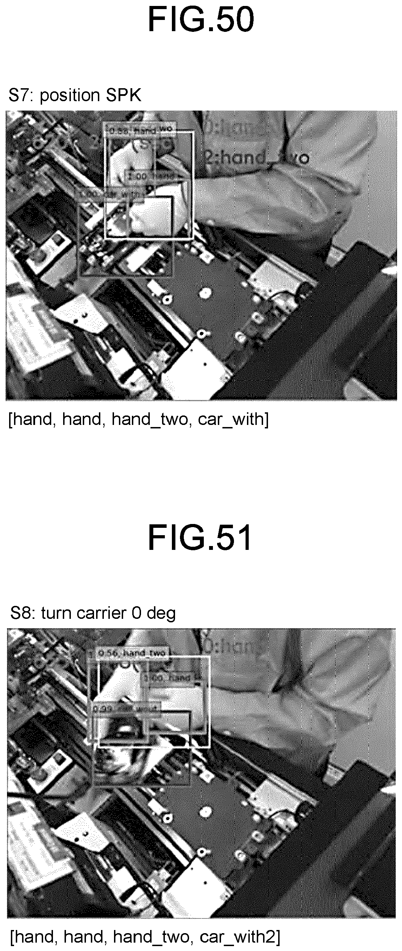

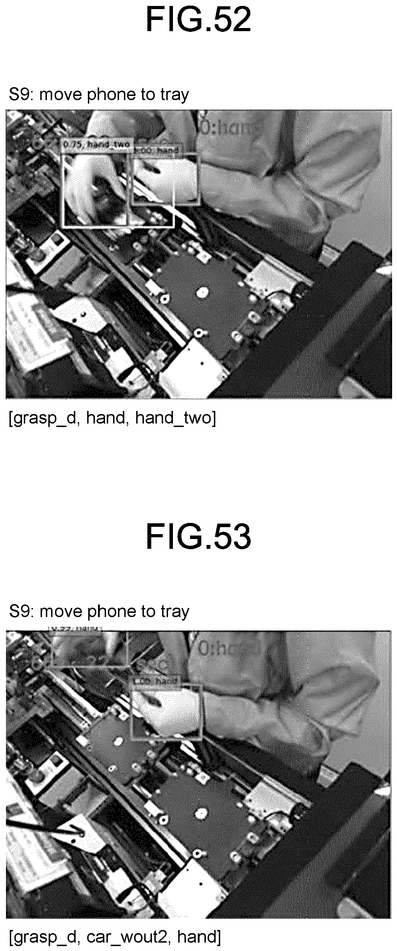

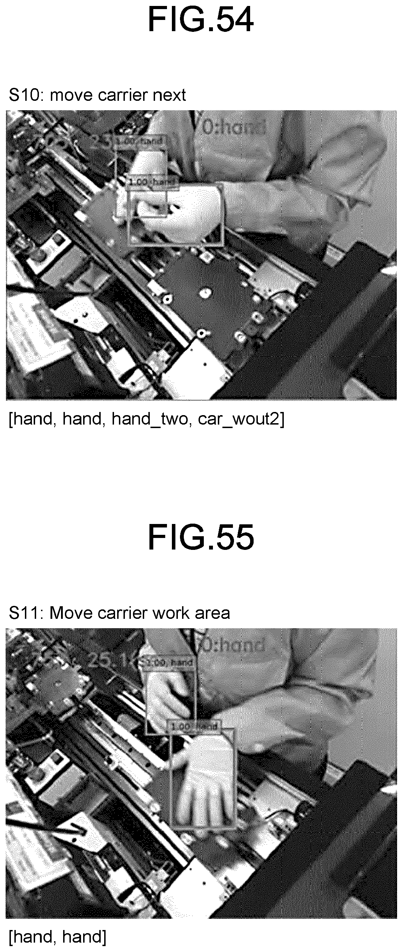

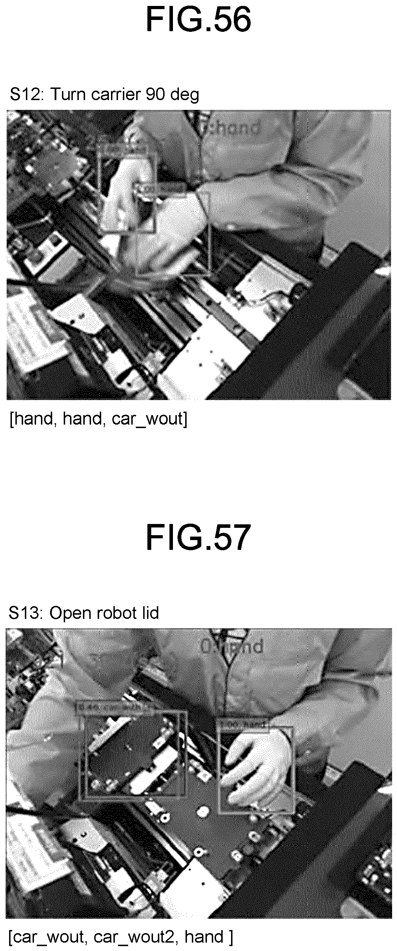

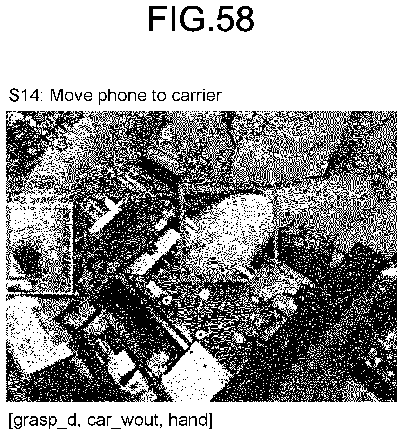

For example, in the input image illustrated in FIG. 40, a work state label "S1: Move phone to robot" is attached to [car_with, car_wout2, blur] that is a pattern of a plurality of objects included in the input image (hereinafter sometimes referred to as an "input image object pattern"). Furthermore, for example, in the input image illustrated in FIG. 43, a work state label of "S2: Position phone" is attached to an input image object pattern of [car_with, car_wout2, hand]. Furthermore, for example, in the input image illustrated in FIG. 45, a work state label of "S3: Press sw" is attached to an input image object pattern of [sw, car_with, hand]. Furthermore, for example, in the input image illustrated in FIG. 46, a work state label of "S4: Move SPK to space" is attached to an input image object pattern of [blur, car_with, hand]. Furthermore, for example, in the input image illustrated in FIG. 48, a work state label of "S5: Air_blow" is attached to an input image object pattern of [hand, hand_two, air _blow]. Furthermore, for example, in the input image illustrated in FIG. 49, a work state label of "S6: Blue seal" is attached to an input image object pattern of [hand, hand]. Furthermore, for example, in the input image illustrated in FIG. 50, a work state label of "S7: Position SPK" is attached to an input image object pattern of [hand, hand, hand_two, car _with]. Furthermore, for example, in the input image illustrated in FIG. 51, a work state label of "S8: Turn carrier 0 deg" is attached to an input image object pattern of [hand, hand, hand_two, car_with2]. Furthermore, for example, in the input image illustrated in FIG. 52, a work state label of "S9: Move phone to tray" is attached to an input image object pattern of [grasp_d, hand, hand _two]. Furthermore, for example, in the input image illustrated in FIG. 54, a work state label of "S10: Move carrier next" is attached to an input image object pattern of [hand, hand, hand_two, car_wout2]. Furthermore, for example, in the input image illustrated in FIG. 55, a work state label of "S11: Move carrier work_area" is attached to an input image object pattern of [hand, hand]. Furthermore, for example, in the input image illustrated in FIG. 56, a work state label of "S12: Turn carrier 90 deg" is attached to an input image object pattern of [hand, hand, car_wout]. Furthermore, for example, in the input image illustrated in FIG. 57, a work state label of "S13: Open robot lid" is attached to an input image object pattern of [car_wout, car_wout2, hand]. Furthermore, for example, in the input image illustrated in FIG. 58, a work state label of "S14: Move phone to carrier" is attached to an input image object pattern of [grasp_d, car_wout, hand].

The second machine learning unit 31 performs machine learning using the input images as illustrated in FIG. 40 to FIG. 58 as the training data to generate a "work state determination model" as a second learned model, and outputs the generated work state determination model to the storage unit 32. The storage unit 32 stores the work state determination model. In other words, the second machine learning unit 31 generates a work state determination model that outputs any one of "S0" to "S14", which is information indicating any one of the plurality of work states, to the plurality of objects detected by the object detection unit 23. As machine learning at the time of generating the work state determination model, for example, SSD or YOLO is used.

The output unit 33 acquires the work state determination model stored in the storage unit 32 from the storage unit 32, and outputs the acquired work state determination model to the work management device 20-2.

<Processing procedure of work management device>

In the work management device 20-2 illustrated in FIG. 39, the acquisition unit 27 acquires the work state determination model output from the second learning device 30 and outputs the acquired work state determination model to the storage unit 28, and the storage unit 28 stores the work state determination model.

Meanwhile, a plurality of objects detected by the object detection unit 23 is input to the work state determination unit 29. The work state determination unit 29 determines the work state indicated by the determination target image using the work state determination model stored in the storage unit 28 based on the detection object pattern, and outputs any one of "S0" to "S14", which is information indicating any one of the plurality of work states, to the process management unit 25 as the determination result of the work state.

The fifth embodiment of the present disclosure has been described above.

[Sixth embodiment]

<Operation of second machine learning unit>

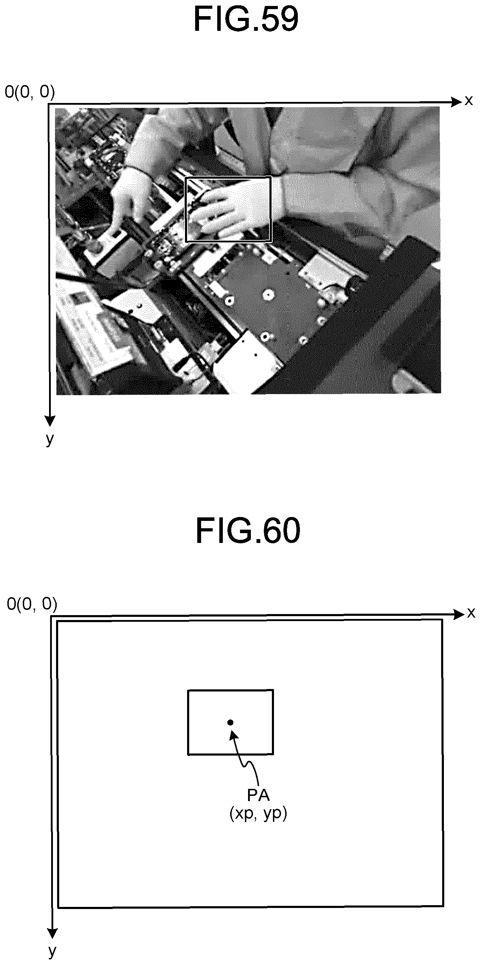

FIGS. 59 and 60 are diagrams illustrating examples of position coordinates of the object according to the sixth embodiment of the present disclosure.

As illustrated in FIGS. 59 and 60, an image in which position coordinates PA (xp, yp) indicating the position of each object in each bounding box are further added to the images as illustrated in FIG. 40 to FIG. 58 is input to the second machine learning unit 31 as the training data. The position coordinates PA (xp, yp) indicate the absolute position of the object in the input image.

The second machine learning unit 31 performs machine learning using the input image to which the position coordinates PA (xp, yp) are provided as the training data to generate the "work state determination model" as the second learned model, and outputs the generated work state determination model to a storage unit 32. The storage unit 32 stores the work state determination model. In other words, the second machine learning unit 31 generates the work state determination model that outputs any one of "S0" to "S14", which is information indicating any one of the plurality of work states, with respect to the plurality of objects detected by the object detection unit 23 and the position coordinates of each of the plurality of objects. As machine learning at the time of generating the work state determination model, for example, SSD or YOLO is used.

<Processing procedure of work management device>

The object detection unit 23 detects a plurality of objects, detects position coordinates of each of the plurality of objects, and outputs the detected objects and the position coordinates to the work state determination unit 29.

The work state determination unit 29 determines the work state indicated by the determination target image using the work state determination model stored in the storage unit 28 based on the detected object pattern and the position coordinates of each object, and outputs any one of "S0" to "S14", which is information indicating any one of the plurality of work states, to the process management unit 25 as a determination result of the work state.

In this manner, by determining the work state using the position coordinates of the object in addition to the detected object pattern, the determination accuracy of the work state can be enhanced.

The sixth embodiment of the present disclosure has been described above.

[Seventh embodiment]

<Operation of second machine learning unit>

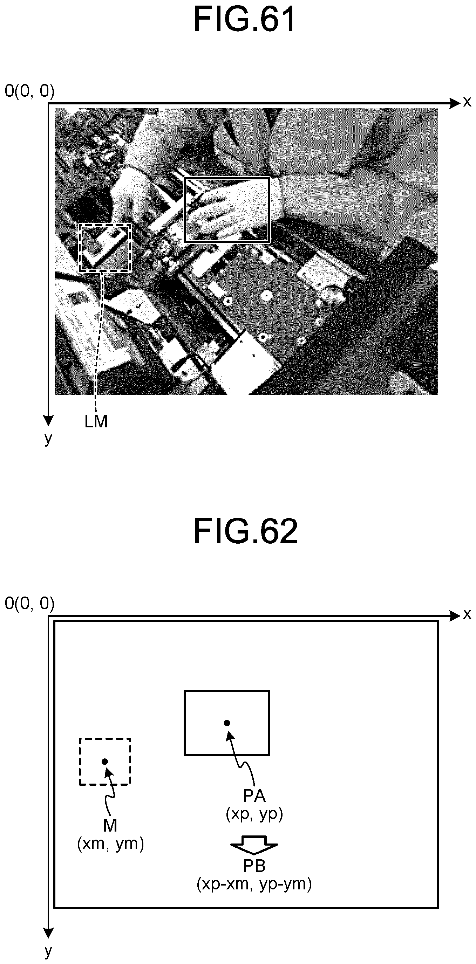

FIGS. 61 and 62 are diagrams illustrating examples of position coordinates of an object according to the seventh embodiment of the present disclosure.

In the sixth embodiment, the position coordinates PA (xp, yp) indicating the position of the object represent the absolute position in the input image.

On the other hand, in the seventh embodiment, as position coordinates indicating the position of the object, position coordinates PB indicating a relative position with respect to a landmark LM in the input image are used instead of the position coordinates PA as illustrated in FIG. 61 and FIG. 62. For example, when the position coordinates of the landmark LM in the input image are M (xm, ym), the relative position coordinates indicating the position of the object are expressed as PB (xp-xm, yp-ym). FIG. 61 illustrates a switch box having a characteristic shape and color as an example of the landmark LM.

As described above, by using the relative position coordinates with respect to the landmark LM as the position coordinates indicating the position of the object, it is possible to suppress a decrease in the determination accuracy of the work state even when the camera angle changes typically due to the installation status of the camera that captures the work state of the worker, as compared with the case of using the absolute position coordinates.

The seventh embodiment of the present disclosure has been described above.

[Eighth embodiment]

Storage units 12, 16, 22, 28, and 32 are realized by, for example, a memory, a hard disk drive (HDD), a solid state drive (SSD), or the like as hardware.

The class setting unit 11, the image transformation unit 13, the bounding box correction unit 14, the first machine learning unit 15, the object detection unit 23, the work state determination units 24 and 29, the process management unit 25, and the second machine learning unit 31 are realized as hardware by, for example, a processor. Examples of the processor include a central processing unit (CPU), a digital signal processor (DSP), a field programmable gate array (FPGA), and an application specific integrated circuit (ASIC).

The output units 17 and 33 and the acquisition units 21 and 27 are realized by, for example, a wired network interface module or a wireless communication module as hardware.

The display unit 26 is realized by, for example, a liquid crystal display as hardware.

The first learning device 10, the second learning device 30, and the work management devices 20-1 and 20-2 are implemented as, for example, computer devices such as a personal computer and a server.

In addition, all or part of each process in the above description in the work management systems 1 and 2 may be realized by causing the processor included in the work management systems 1 and 2 to execute a program corresponding to each process. For example, a program corresponding to each process in the above description may be stored in a memory, and the program may be read from the memory and executed by the processor. In addition, the program may be stored in a program server connected to the work management systems 1 and 2 via an arbitrary network, downloaded from the program server to the work management systems 1 and 2, and executed, or may be stored in a recording medium readable by the work management systems 1 and 2, read from the recording medium, and executed. Examples of the recording medium readable by the work management systems 1 and 2 include portable storage media such as a memory card, a USB memory, an SD card, a flexible disk, a magneto-optical disk, a CD-ROM, a DVD, and a Bluray (registered trademark) disk. In addition, the program is a data processing method described in an arbitrary language or an arbitrary description method, and may be in any format such as a source code or a binary code. In addition, the program is not necessarily limited to a single program, and includes a program configured in a distributed manner as a plurality of modules or a plurality of libraries, and a program that achieves a function thereof in cooperation with a separate program represented by an OS.

In addition, specific forms of distribution and integration of the work management systems 1 and 2 are not limited to those illustrated in the drawings, and all or part of the work management systems 1 and 2 can be functionally or physically distributed and integrated in arbitrary units according to various additions or the like or according to a functional load.

The eighth embodiment of the present disclosure has been described above.

[Effects of disclosed technology]

As described above, the learning device according to the present disclosure (the first learning device 10 according to the first embodiment) includes the transformation unit (the image transformation unit 13 according to the first embodiment), the correction unit (the bounding box correction unit 14 according to the first embodiment), and the learning unit (the first machine learning unit 15 according to the first embodiment). The transformation unit performs geometric image transformation on an input image including a hand image that is an image of a hand of a worker who is performing a product manufacturing work, and the first bounding box (the bounding box BX1 according to the first embodiment) set for an object, to generate a transformed image that is an input image after the geometric image transformation. The correction unit sets the third bounding box (bounding box BX3 according to the first embodiment) obtained by correcting the second bounding box (the bounding box BX2 according to the first embodiment) included in the image after transformation to the transformed image. The learning unit performs machine learning using the transformed image in which the third bounding box is set as the training data to generate, with respect to the determination target image including the hand image, a learned model (object detection model according to the first embodiment) that outputs a plurality of objects defining each of a plurality of work states forming one process of the manufacturing work.

The correction unit generates a rectangle (the rectangle SQ according to the first embodiment) including each of four vertices of the second bounding box in each of four sides, and generates the third bounding box by reducing the area of the rectangle based on the hand image included in the rectangle.

Furthermore, the correction unit reduces the area of the rectangle by using edge detection for the hand image included in the rectangle.

Furthermore, for example, the correction unit (the bounding box correction unit 14 according to the second embodiment) specifies a plurality of areas (the areas AR1 to AR4 according to the second embodiment) surrounded by the outside of the second bounding box and the inside of the third bounding box, calculates a ratio of pixels having luminance less than the threshold among pixels included in each area in each of the plurality of areas, and excludes, from the training data, a transformed image in which at least one area having a ratio equal to or greater than the predetermined value exists in the plurality of areas.

Furthermore, for example, the transformation unit (the image transformation unit 13 according to the third embodiment) excludes, from the transformation target of the geometric image transformation, the input image in which the area of the first bounding box exists outside an area of a circle centered on the center of the input image, the circle being in contact with the upper side and the lower side of the input image or the left side and the right side of the input image.

Furthermore, for example, the learning device according to the present disclosure (the first learning device 10 according to the first embodiment) further includes the setting unit (the class setting unit 11 according to the first embodiment). The setting unit sets each class of the plurality of objects from keywords included in the work procedure document indicating the work procedure of one process.

According to the above configuration, a good learned model can be generated.

Note that the effects described in the present specification are merely examples and are not limited, and other effects may be provided.

Reference Signs List

| | |
|---|---|
| 1, 2 | WORK MANAGEMENT SYSTEM |
| 10 | FIRST LEARNING DEVICE |
| 20-1, 20-2 | WORK MANAGEMENT DEVICE |
| 11 | CLASS SETTING UNIT |
| 12, 16, 22, 28, 32 | STORAGE UNIT |
| 13 | IMAGE TRANSFORMATION UNIT |
| 14 | BOUNDING BOX CORRECTION UNIT |
| 15 | FIRST MACHINE LEARNING UNIT |
| 17, 33 | OUTPUT UNIT |
| 21, 27 | ACQUISITION UNIT |
| 23 | OBJECT DETECTION UNIT |
| 24, 29 | WORK STATE DETERMINATION UNIT |
| 25 | PROCESS MANAGEMENT UNIT |
| 26 | DISPLAY UNIT |
| 30 | SECOND LEARNING DEVICE |
| 31 | SECOND MACHINE LEARNING UNIT |

## EP 4 099 264 B1

**Claims**

1. A learning device (10) comprising:

   a transformation unit (13) configured to generate a transformed image that is an input image after geometric image transformation by performing the geometric image transformation on the input image including a hand image and a first bounding box (BX1) set for an object, the hand image being an image of a hand of a worker who is performing a manufacturing work of a product;
   a correction unit (14) configured to set a third bounding box (BX3) in the transformed image, the third bounding box being obtained by correcting a second bounding box (BX2) included in the transformed image, the second bounding box in the transformed image corresponding to the first bounding box in the input image, deformed by the geometric image transformation; and
   a learning unit (15) configured to generate, with respect to a determination target image including the hand image, a learned model that outputs a plurality of objects defining each of a plurality of work states forming one process of the manufacturing work by performing machine learning using the transformed image as training data, the third bounding box being set in the transformed image;
   wherein
   the correction unit (14) is configured to generate a rectangle (SQ) including respective four vertexes of the second bounding box (BX2) in respective four sides, and generate the third bounding box (BX3) by reducing an area of the rectangle based on the hand image included in the rectangle; and wherein
   the correction unit (14) is configured to reduce the area of the rectangle by performing edge detection on the hand image included in the rectangle.

2. The learning device according to claim 1, wherein
   the correction unit is configured to identify a plurality of areas surrounded with an outside of the second bounding box and an inside of the third bounding box, calculates a ratio of pixels having luminance less than a threshold in pixels included in each of the plurality of areas, and exclude from the training data the transformed image in which at least one area in the plurality of areas has the ratio equal to or greater than a predetermined value.

3. The learning device according to claim 1, wherein
   the transformation unit is configured to exclude, from a transformation target of the geometric image transformation, the input image in which an area of the first bounding box exists outside an area of a circle centered on a center of the input image, the circle being in contact with upper and lower sides of the input image or left and right sides of the input image.

4. The learning device according to claim 1, further comprising:
   a setting unit configured to set each class of the plurality of objects from a keyword included in a work procedure document indicating a work procedure of the one process.

5. A learning method comprising:

   generating a transformed image that is an input image after geometric image transformation by performing the geometric image transformation on the input image including a hand image and a first bounding box (BX1) set for an object, the hand image being an image of a hand of a worker who is performing a manufacturing work of a product;
   setting a third bounding box (BX3) in the transformed image, the third bounding box being obtained by correcting a second bounding box (BX2) included in the transformed image, the second bounding box in the transformed image corresponding to the first bounding box in the input image, deformed by the geometric image transformation; and
   generating, with respect to a determination target image including the hand image, a learned model that outputs a plurality of objects defining each of a plurality of work states forming one process of the manufacturing work by performing machine learning using the transformed image as training data, the third bounding box being set in the transformed image; wherein
   the method comprises generating a rectangle (SQ) including respective four vertexes of the second bounding box (BX2) in respective four sides, and generating the third bounding box (BX3) by reducing an area of the rectangle based on the hand image included in the rectangle; and wherein
   the method comprises reducing the area of the rectangle by performing edge detection on the hand image included in the rectangle.

# EP 4 099 264 B1

**Patentansprüche**

1. Lernvorrichtung (10), umfassend:

   eine Transformationseinheit (13), die konfiguriert ist, um ein transformiertes Bild zu erzeugen, das ein Eingabebild nach der geometrischen Bildtransformation ist, indem die geometrische Bildtransformation an dem Eingabebild durchgeführt wird, das ein Handbild und einen ersten Begrenzungskasten (BX1) einschließt, der für ein Objekt eingerichtet ist, wobei das Handbild ein Bild einer Hand eines Arbeiters ist, der eine Fertigungsarbeit eines Produkts ausführt;

   eine Korrektureinheit (14), die konfiguriert ist, um einen dritten Begrenzungskasten (BX3) in dem transformierten Bild einzustellen, wobei der dritte Begrenzungskasten durch Korrigieren eines zweiten Begrenzungskastens (BX2), der in dem transformierten Bild eingeschlossen ist, erhalten wird, wobei der zweite Begrenzungskasten in dem transformierten Bild dem ersten Begrenzungskasten in dem Eingangsbild entspricht, der durch die geometrische Bildtransformation verformt ist; und

   eine Lerneinheit (15), die konfiguriert ist, um in Bezug auf ein Bestimmungszielbild, das das Handbild einschließt, ein erlerntes Modell zu erzeugen, das eine Vielzahl von Objekten ausgibt, die jeden aus einer Vielzahl von Arbeitszuständen definieren, die einen Prozess der Fertigungsarbeit bilden, indem maschinelles Lernen unter Verwendung des transformierten Bildes als Trainingsdaten durchgeführt wird, wobei der dritte Begrenzungskasten in das transformierte Bild gesetzt wird;

   wobei

   die Korrektureinheit (14) konfiguriert ist, um ein Rechteck (SQ) zu erzeugen, das jeweilige vier Scheitelpunkte des zweiten Begrenzungskastens (BX2) in jeweiligen vier Seiten einschließt, und um den dritten Begrenzungskasten (BX3) zu erzeugen, indem ein Bereich des Rechtecks basierend auf dem in dem Rechteck eingeschlossenen Handbild reduziert wird; und wobei

   die Korrektureinheit (14) konfiguriert ist, um den Bereich des Rechtecks zu reduzieren, indem sie eine Kantenerkennung an dem in dem Rechteck enthaltenen Handbild durchführt.

2. Lernvorrichtung nach Anspruch 1, wobei
   die Korrektureinheit konfiguriert ist, um eine Vielzahl von Bereichen zu identifizieren, die von einer Außenseite des zweiten Begrenzungskastens und einer Innenseite des dritten Begrenzungskastens umgeben sind, ein Verhältnis von Pixeln, die eine geringere Luminanz als ein Schwellenwert aufweisen, in Pixeln berechnet, die in jedem der Vielzahl von Bereichen eingeschlossen sind, und aus den Trainingsdaten das transformierte Bild ausschließt, in dem mindestens ein Bereich in der Vielzahl von Bereichen das Verhältnis gleich oder größer als ein vorbestimmter Wert aufweist.

3. Lernvorrichtung nach Anspruch 1, wobei
   die Transformationseinheit konfiguriert ist, um von einem Transformationsziel der geometrischen Bildtransformation das Eingangsbild auszuschließen, in dem ein Bereich des ersten Begrenzungskastens außerhalb eines Bereichs eines Kreises existiert, der auf einer Mitte des Eingangsbildes zentriert ist, wobei der Kreis in Kontakt mit oberen und unteren Seiten des Eingangsbildes oder linken und rechten Seiten des Eingangsbildes ist.

4. Lernvorrichtung nach Anspruch 1, ferner umfassend:
   eine Einstellungseinheit, die konfiguriert ist, um jede Klasse der Vielzahl von Objekten anhand eines Schlüsselworts einzustellen, das in einem Arbeitsverfahrensdokument eingeschlossen ist, das ein Arbeitsverfahren des einen Prozesses angibt.

5. Lernverfahren, umfassend:

   Erzeugen eines transformierten Bildes, das ein Eingabebild nach der geometrischen Bildtransformation ist, indem die geometrische Bildtransformation an dem Eingabebild durchgeführt wird, das ein Handbild und einen ersten Begrenzungskasten (BX1) einschließt, der für ein Objekt eingerichtet ist, wobei das Handbild ein Bild einer Hand eines Arbeiters ist, der eine Fertigungsarbeit eines Produkts ausführt;

   Einstellen eines dritten Begrenzungskastens (BX3) in dem transformierten Bild, wobei der dritte Begrenzungskasten durch Korrigieren eines zweiten Begrenzungskastens (BX2), der in dem transformierten Bild eingeschlossen ist, erhalten wird, wobei der zweite Begrenzungskasten in dem transformierten Bild dem ersten Begrenzungskasten in dem Eingangsbild entspricht, der durch die geometrische Bildtransformation verformt ist; und

   Erzeugen, in Bezug auf ein Bestimmungszielbild, das das Handbild einschließt, eines erlernten Modells, das eine Vielzahl von Objekten ausgibt, die jeden aus einer Vielzahl von Arbeitszuständen definieren, die einen Prozess der Fertigungsarbeit bilden, indem maschinelles Lernen unter Verwendung des transformierten Bildes als Trainingsdaten durchgeführt wird, wobei der dritte Begrenzungskasten in das transformierte Bild gesetzt wird; wobei

das Verfahren das Erzeugen eines Rechtecks (SQ), das jeweilige vier Scheitelpunkte des zweiten Begrenzungskastens (BX2) in jeweiligen vier Seiten einschließt, und das Erzeugen des dritten Begrenzungskastens (BX3) umfasst, indem ein Bereich des Rechtecks basierend auf dem in dem Rechteck eingeschlossenen Handbild reduziert wird; und wobei

das Verfahren das Reduzieren des Bereichs des Rechtecks umfasst, indem sie eine Kantenerkennung an dem in dem Rechteck enthaltenen Handbild durchführt.

## Revendications

1. Dispositif d'apprentissage (10) comprenant :

une unité de transformation (13) configurée pour générer une image transformée qui est une image d'entrée après transformation géométrique d'image en mettant en oeuvre la transformation géométrique d'image sur l'image d'entrée comportant une image de main et un premier cadre de sélection (BX1) réglé pour un objet, l'image de main étant une image d'une main d'un travailleur qui est en train de mettre en oeuvre un travail de fabrication d'un produit ;

une unité de correction (14) configurée pour régler un troisième cadre de sélection (BX3) dans l'image transformée, le troisième cadre de sélection étant obtenu par correction d'un deuxième cadre de sélection (BX2) inclus dans l'image transformée, le deuxième cadre de sélection dans l'image transformée correspondant au premier cadre de sélection dans l'image d'entrée, déformé par la transformation géométrique d'image ; et

une unité d'apprentissage (15) configurée pour générer, par rapport à une image cible de détermination comportant l'image de main, un modèle appris qui délivre en sortie une pluralité d'objets définissant chacun d'une pluralité d'états de travail formant un processus du travail de fabrication en mettant en oeuvre un apprentissage automatique à l'aide de l'image transformée en guise de données d'entraînement, le troisième cadre de sélection étant réglé dans l'image transformée ;

dans lequel

l'unité de correction (14) est configurée pour générer un rectangle (SQ) comportant quatre sommets respectifs du deuxième cadre de sélection (BX2) dans quatre côtés respectifs, et générer le troisième cadre de sélection (BX3) en réduisant une aire du rectangle en fonction de l'image de main incluse dans le rectangle ; et dans lequel l'unité de correction (14) est configurée pour réduire l'aire du rectangle en mettant en oeuvre une détection de bord sur l'image de main incluse dans le rectangle.

2. Dispositif d'apprentissage selon la revendication 1, dans lequel
l'unité de correction est configurée pour identifier une pluralité d'aires entourées avec un extérieur du deuxième cadre de sélection et un intérieur du troisième cadre de sélection, calcule un rapport de pixels ayant une luminance inférieure à un seuil dans des pixels inclus dans chacune parmi la pluralité d'aires, et exclure des données d'entraînement l'image transformée dans laquelle au moins une aire dans la pluralité d'aires a le rapport égal ou supérieur à une valeur prédéterminée.

3. Dispositif d'apprentissage selon la revendication 1, dans lequel
l'unité de transformation est configurée pour exclure, d'une cible de transformation de la transformation géométrique d'image, l'image d'entrée dans laquelle une aire du premier cadre de sélection existe à l'extérieur d'une aire d'un cercle centré sur un centre de l'image d'entrée, le cercle étant en contact avec des côtés supérieur et inférieur de l'image d'entrée ou des côtés gauche et droit de l'image d'entrée.

4. Dispositif d'apprentissage selon la revendication 1, comprenant en outre :
une unité de réglage configurée pour régler chaque classe de la pluralité d'objets à partir d'un mot-clé inclus dans un document de procédure de travail indiquant une procédure de travail dudit processus.

5. Procédé d'apprentissage comprenant :

la génération d'une image transformée qui est une image d'entrée après transformation géométrique d'image en mettant en oeuvre la transformation géométrique d'image sur l'image d'entrée comportant une image de main et un premier cadre de sélection (BX1) réglé pour un objet, l'image de main étant une image d'une main d'un travailleur qui est en train de mettre en oeuvre un travail de fabrication d'un produit ;

le réglage d'un troisième cadre de sélection (BX3) dans l'image transformée, le troisième cadre de sélection étant obtenu par correction d'un deuxième cadre de sélection (BX2) inclus dans l'image transformée, le deuxième cadre de sélection dans l'image transformée correspondant au premier cadre de sélection dans l'image d'entrée, déformé par la transformation géométrique d'image ; et

la génération, par rapport à une image cible de détermination comportant l'image de main, d'un modèle appris qui délivre en sortie une pluralité d'objets définissant chacun d'une pluralité d'états de travail formant un processus du travail de fabrication en mettant en oeuvre un apprentissage automatique à l'aide de l'image transformée en guise de données d'entraînement, le troisième cadre de sélection étant réglé dans l'image transformée ; dans lequel

le procédé comprend la génération d'un rectangle (SQ) comportant quatre sommets respectifs du deuxième cadre de sélection (BX2) dans quatre côtés respectifs, et la génération du troisième cadre de sélection (BX3) en réduisant une aire du rectangle en fonction de l'image de main incluse dans le rectangle ; et dans lequel

le procédé comprend la réduction de l'aire du rectangle en mettant en oeuvre une détection de bord sur l'image de main incluse dans le rectangle.

# FIG.1

PROCEDURE
DATA

↓ ⌇10

INPUT IMAGE → | FIRST LEARNING
DEVICE |

1

↓

⌇20-1

DETERMINATION
TARGET IMAGE → | WORK MANAGEMENT DEVICE |

# FIG.2

PROCEDURE DATA

10

INPUT IMAGE → | STORAGE UNIT | ← | CLASS SETTING UNIT |

12

11

| IMAGE TRANS-FORMATION UNIT | → | BOUNDING BOX CORRECTION UNIT |

13

14

| FIRST MACHINE LEARNING UNIT |

15

| STORAGE UNIT |

16

| OUTPUT UNIT |

17

FIRST LEARNING DEVICE

OBJECT
DETECTION MODEL

# FIG.3

OBJECT DETECTION
MODEL

20-1

21

ACQUISITION UNIT

22

STORAGE UNIT

23

DETERMINATION
TARGET IMAGE → OBJECT
DETECTION UNIT

24

WORK STATE
DETERMINATION
UNIT

25

PROCESS
MANAGEMENT
UNIT

26

DISPLAY UNIT

WORK MANAGEMENT
DEVICE

# FIG.4

| WORK PROCESS NUMBER | 5 |
|---|---|
| WORK PROCESS NAME | SPEAKER MOUNTING |
| WORK PROCESS TIME | 22 SEC |

| WORK NUMBER | WORK NAME | WORK CONTENT | WORK TIME (SEC) |
|---|---|---|---|
| 1 | MOVE | PICK AND MOVE BY HAND SMARTPHONE FROM PARTS STORAGE AREA AT LEFT END TO ROBOT IN FRONT. | 2 |
| 2 | POSITION | HOLD AND POSITION BY HAND MOVED SMARTPHONE DOWNWARD ON ROBOT IN FRONT OF WORKPLACE. | 3 |
| 3 | OPERATE SWITCH | PRESS GREEN SWITCH ON RIGHT FRONT OF WORKPLACE BY HAND. | 2 |
| 4 | MOVE SPEAKER | PICK AND MOVE SPEAKER BY HAND FROM PARTS STORAGE AREA AT RIGHT END. | 2 |
| 5 | REMOVE WASTE | HOLD PART A WITH ONE HAND, AND HOLD AIR BLOW WITH ANOTHER HAND AND PICK PART A. | 5 |
| 6 | APPLY SEAL | REMOVE BLUE SEAL FROM FRONT OF WORKPLACE AND APPLY IT TO PART BY HAND. | 3 |
| 7 | POSITION SPEAKER | HOLD AND POSITION SPEAKER IN SMARTPHONE BY HAND. | 3 |
| 8 | TURN WORK CARRIER | TURN WORK CARRIER TO 0 DEGREES BY HAND. | 2 |

⋮

# FIG.5

TEXT DATA EXTRACTION

"PICK AND MOVE SMARTPHONE FROM PARTS STORAGE AREA AT LEFT END TO ROBOT IN FRONT BY HAND."

MORPHOLOGI-CAL ANALYSIS

LEFT
END
PART
STORAGE AREA
SMARTPHONE
HAND
PICK
FRONT
ROBOT
MOVE

KEYWORD DETECTION

HAND

KEYWORD CONVERSION

"hand"

AGGREGATE CALCULATION

DATA COUNT

hand ··· sw ···

SORT

DATA COUNT

hand ··· sw ···

"PRESS GREEN SWITCH ON RIGHT FRONT OF WORKPLACE BY HAND."

WORKPLACE
RIGHT
SWITCH
GREEN
HAND

SWITCH
HAND

"sw"
"hand"

EP 4 099 264 B1

# FIG.6

# FIG.7

CLT

| CLASS | LABEL | OBJECT CONTENT |
|-------|-------|----------------|
| C0 | hand | Standard hand detection |
| C1 | tweezer | Tweezer operation |
| C2 | hand_two | Two hand operation |
| C3 | grasp_u | Grasping (Grab) object hand facing up |
| C4 | grasp_d | Grasping object hand facing down |
| C5 | blur | Motion blur of hand |
| C6 | sw | Pressing switch |
| C7 | push | Pushing with special tool |
| C8 | push_a | Pushing with tweezer tip edge |
| C9 | push_b | Pushing with tweezer back edge |
| C10 | push_side | Pushing with jig from side |
| C11 | count | Counting completed operation |
| C12 | garbage | Disposing into vacuum bin |
| C13 | wipe | Wiping with cloth |
| C14 | air_blow | Operation with air blow |
| C15 | vac_pen | Taking part with vacuum pen |
| C16 | ion_blow | Air ionizer blowing |
| C17 | mouse | Mouse operation |
| C18 | car_wout | Turning carrier 90 deg without phone |
| C19 | car_with | Turning carrier 90 deg with phone |
| C20 | car_wout2 | Turning carrier 0 deg without phone |
| C21 | car_with2 | Turning carrier 0 deg with phone |

# FIG.8

BX1

car_with2

HI

# FIG.9

BX1

hand

HI

# FIG.10

# FIG.11

# FIG.12

# FIG.13

AFFINE
TRANSFORMATION

hand

BX1    (xn, yn)

hand

(xn', yn')    BX2

EP 4 099 264 B1

# FIG.14

AFFINE
TRANSFORMATION

AUGMENTATION

# FIG.15

EP 4 099 264 B1

# FIG.16

BX2

SQ

# FIG.17

(xmin, ymin)          (x2', y2')          (x3', y2')

(x1', y1')          (x3', y3')

BX2

(x1', y4')          (x4', y4')     SQ     (xmax, ymax)

# FIG.18

# FIG.19

# FIG.20

BX2

# FIG.21

BX2

# FIG.22

# FIG.23

EP 4 099 264 B1

# FIG.24

DI

OBJECT DETECTION MODEL

# FIG.25

FIG.26

# FIG.27

| WORK STATE | NOTATION | WORK CONTENT |
|---|---|---|
| S0 | others | EXCEPTIONAL WORK NOT DESCRIBED IN WORK PROCEDURE DOCUMENT |
| S1 | move phone to robot | MOVE SMARTPHONE TO ROBOT |
| S2 | position phone | PLACE SMARTPHONE ON PREDETERMINED POSITION |
| S3 | press sw | PRESS BUTTON SWITCH |
| S4 | move SPK to space | MOVE SPEAKER TO WORK AREA |
| S5 | air blow | REMOVE DUST WITH AIR BLOW |
| S6 | blue seal | APPLY BLUE SEAL |
| S7 | position SPK | PLACE SPEAKER ON PREDETERMINED POSITION |
| S8 | turn carrier 0 deg | SET WORK CARRIER TO 0 DEGREES |
| S9 | move phone to tray | MOVE SMARTPHONE TO TRAY |
| S10 | move carrier next | MOVE NEXT WORK CARRIER |
| S11 | Move carrier work area | MOVE WORK CARRIER TO WORK AREA |
| S12 | Turn carrier 90 deg | TURN WORK CARRIER BY 90 DEGREES |
| S13 | Open robot lid | OPEN ROBOT LID |
| S14 | Move phone to carrier | MOVE SMARTPHONE TO WORK CARRIER |

EP 4 099 264 B1

# FIG.28

| DETECTION OBJECT PATTERN | WORK STATE |
| --- | --- |
| [car_with, car_wout2, blur] | S1: move phone to robot |
| [grasp_d, car_with, car_wout2, hand] | S1: move phone to robot |
| [blur, car_with, car_wout2, hand] | S1: move phone to robot |
| [car_with, car_wout2, hand] | S2: position phone |
| [hand, car_with, car_wout2, hand] | S2: position phone |
| [sw, car_with, hand] | S3: press sw |
| [blur, car_with, hand] | S4: move SPK to space |
| [blur, car_with, car_wout2] | S4: move SPK to space |
| [hand, hand_two, air_blow] | S5: air blow |
| [hand, hand] | S6: blue seal |
| [hand, hand, hand_two, car_with] | S7: position SPK |
| [hand, hand, hand_two, car_with2] | S8: turn carrier 0 deg |
| [grasp_d, hand, hand_two] | S9: move phone to tray |
| [grasp_d, car_wout2, hand] | S9: move phone to tray |
| [hand, hand, hand_two, car_wout2] | S10: move carrier next |
| [hand, hand] | S11: Move carrier work area |
| [hand, hand, car_wout] | S12: Turn carrier 90 deg |
| [car_wout, car_wout2, hand ] | S13: Open robot lid |
| [grasp_d, car_wout, hand] | S14: Move phone to carrier |

# FIG.29

| WORK VIDEO | WORK STATE | WORK TIME(sec) | FREQUENCY EQUAL TO OR LONGER THAN STANDARD WORK TIME |
|---|---|---|---|

- S0. others
- S1. Move phone to robot
- S2. Position phone
- S3. Press SW
- S4. Move SPK to space
- S5. Air_blow
- S6. Blue seal
- S7. Position SPK
- S8. Turn carrier 0deg
- S9. Move phone to tray
- S10. Move carrier next
- S11. Move carrier work_area
- S12. Turn carrier 90deg
- S13. Open robot lid
- S14. Move phone to carrier

STANDARD WORK TIME    ALLOWABLE WORK TIME

EP 4 099 264 B1

**FIG.30**

START

t(m)w=0 —S200

CURRENT TIME=
WORK TIME? ⌐S205 — NO

↓YES

ACQUIRE DETERMINATION
TARGET IMAGE —S210

WORKER(n) PRESENT? ⌐S215 — NO

↓YES

St(n)=1 —S220          St(n)=0 ⌐S225

DETECT OBJECT —S230

DETERMINE WORK STATE —S235

DISPLAY WORK VIDEO —S240

DETECT t(n) —S245

DISPLAY BAR GRAPH —S250

SPECIFIED TIME<t(n)? ⌐S255 — NO

↓YES

CHANGE DISPLAY —S260

ta<t(n)? ⌐S265 — NO

↓YES

ATTENTION DISPLAY —S270

t(m)wa<t(m)w? ⌐S275 — NO

↓YES

STOP ATTENTION DISPLAY —S280

t(m)w=0 —S285

OPERATION STOPPED? ⌐S290 — NO

↓YES

END

# FIG.31

# FIG.32

O

CIR

BX1

# FIG.33

O

CIR

BX1

# FIG.34

NUMBER OF
ACCUMULATED
DETERMINATION
RESULTS

S0  S1  S2  S3  S4  S5  ...  S13 S14

# FIG.35

NUMBER OF
ACCUMULATED
DETERMINATION
RESULTS

S0  S1  S2  S3  S4  S5  ...  S13 S14

# FIG.36

# FIG.37

# FIG.38

# FIG.39

# FIG.40

S1: move phone to robot

[car_with, car_wout2, blur]

# FIG.41

S1: move phone to robot

[grasp_d, car_with, car_wout2, hand]

# FIG.42

S1: move phone to robot

[blur, car_with, car_wout2, hand]

# FIG.43

S2: position phone

[car_with, car_wout2, hand]

# FIG.44

S2: position phone

[hand, car_with, car_wout2, hand]

# FIG.45

S3: press sw

[sw, car_with, hand]

# FIG.46

S4: move SPK to space

[blur, car_with, hand]

# FIG.47

S4: move SPK to space

[blur, car_with, car_wout2]

# FIG.48

S5: air blow

[hand, hand_two, air_blow]

# FIG.49

S6: blue seal

[hand, hand]

# FIG.50

S7: position SPK

[hand, hand, hand_two, car_with]

# FIG.51

S8: turn carrier 0 deg

[hand, hand, hand_two, car_with2]

# FIG.52

S9: move phone to tray

[grasp_d, hand, hand_two]

# FIG.53

S9: move phone to tray

[grasp_d, car_wout2, hand]

# FIG.54

S10: move carrier next

[hand, hand, hand_two, car_wout2]

# FIG.55

S11: Move carrier work area

[hand, hand]

# FIG.56

S12: Turn carrier 90 deg

[hand, hand, car_wout]

# FIG.57

S13: Open robot lid

[car_wout, car_wout2, hand ]

# FIG.58

S14: Move phone to carrier

[grasp_d, car_wout, hand]

# FIG.59

# FIG.60

# FIG.61

# FIG.62

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009217348 A
- JP 2013161295 A
- JP 2016062253 A
- US 2018189596 A1
- US 2018033130 A1

**Non-patent literature cited in the description**

- Perspective Transformation Data Augmentation for Object Detection. **WANG KE et al.** IEEE ACCESS. IEEE, 26 December 2019, vol. 8, 4935-4943
- **KATHURIA AYOOSH.** *Data Augmentation for objection detection: How to Rotate Bounding Boxes,* 18 September 2018, 1-21, https://web.archive.org/web/20180918073144